(19) Europäisches Patentamt
European Patent Office
Office européen des brevets

(11) EP 4 518 552 A1

(12) **EUROPEAN PATENT APPLICATION**
published in accordance with Art. 153(4) EPC

(43) Date of publication:
05.03.2025 Bulletin 2025/10

(21) Application number: 23795408.6

(22) Date of filing: 25.04.2023

(51) International Patent Classification (IPC):
*H04W 74/08* (2024.01) *H04W 72/04* (2023.01)

(52) Cooperative Patent Classification (CPC):
H04W 36/00; H04W 72/04; H04W 74/08;
H04W 80/06

(86) International application number:
PCT/CN2023/090583

(87) International publication number:
WO 2023/207976 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 CN 202210459591

(71) Applicant: VIVO MOBILE COMMUNICATION CO.,
LTD.
Dongguan, Guangdong 523863 (CN)

(72) Inventors:
• WU, Kai
Dongguan, Guangdong 523863 (CN)
• CHEN, Xiaohang
Dongguan, Guangdong 523863 (CN)
• WANG, Lihui
Dongguan, Guangdong 523863 (CN)

(74) Representative: Lavoix
Bayerstraße 83
80335 München (DE)

(54) **PHYSICAL RANDOM ACCESS CHANNEL TRANSMISSION RESOURCE DETERMINATION METHOD AND APPARATUS, TERMINAL, AND DEVICE**

(57) This application discloses a method and apparatus for determining a physical random access channel (PRACH) transmission resource, and a terminal, belonging to the technical field of communications. The method for determining the physical random access channel transmission resource of embodiments of this application includes: performing, by a terminal, a target operation of a PRACH transmission resource based on a target configuration, where the target configuration includes at least one of: a configuration of a duplex mode and a configuration of a flexible time division duplex TDD mode; and the target operation includes at least one of: determining the validity of the PRACH transmission resource; determining whether to transmit on the PRACH transmission resource; and determining the PRACH transmission resource.

```
          ┌──────────────┐
          │    Start     │
          └──────┬───────┘
                 │
   ┌─────────────▼──────────────────────────────┐
   │ A terminal performs a target operation of  │── 201
   │ a PRACH transmission resource based on a   │
   │ target configuration                       │
   └─────────────┬──────────────────────────────┘
                 │
          ┌──────▼───────┐
          │     End      │
          └──────────────┘
```

FIG. 2

EP 4 518 552 A1

**Description**

**CROSS-REFERENCE TO RELATED APPLICATIONS**

This application claims the priority of Chinese Patent Application No. 202210459591.3 filed in China on April 27, 2022, which is incorporated herein by reference in its entirety.

**TECHNICAL FIELD**

This application belongs to the technical field of communications, and in particular, relates to a method and apparatus for determining a physical random access channel transmission resource, a terminal, and a device.

**BACKGROUND**

A terminal transmits a physical random access channel (Physical Random Access Channel, PRACH) on a PRACH transmission resource. However, the current PRACH transmission resource is a resource pre-configured by a network side for PRACH transmission, and the network side does not consider other configurations when configuring the PRACH transmission resource, resulting in poor configuration flexibility of the resource for PRACH transmission.

**SUMMARY**

Embodiments of this application provide a method and apparatus for determining a physical random access channel transmission resource, and a terminal to solve the problem of poor configuration flexibility of the resource for PRACH transmission.

In a first aspect, a method for determining a physical random access channel transmission resource is provided, which includes:

performing, by a terminal, a target operation of a PRACH transmission resource based on a target configuration, where the target configuration includes at least one of:

a configuration of a duplex mode and a configuration of a flexible time division duplex (Time Division Duplex, TDD) mode; and
the target operation includes at least one of:

determining the validity of the PRACH transmission resource;
determining whether to transmit on the PRACH transmission resource; and
determining the PRACH transmission resource.

In a second aspect, a method for determining a physical random access channel transmission resource is provided, which includes:

performing, by a network-side device, a target operation of a physical random access channel PRACH transmission resource based on a target configuration,
where the target configuration includes at least one of:

a configuration of a duplex mode and a configuration of a flexible time division duplex TDD mode; and
the target operation includes at least one of:

receiving a PRACH on a valid first PRACH transmission resource, where the validity of the first PRACH transmission resource is determined based on the target configuration;
receiving a PRACH on a second PRACH transmission resource, where the second PRACH transmission resource is a PRACH resource determined to have PRACH transmission thereon based on the target configuration; and
configuring a first configuration, where the first configuration is used for determining the PRACH transmission resource.

In a third aspect, a method for determining a physical random access channel transmission resource is provided, which includes:

sending, by a network-side device, configuration information to a terminal, where the configuration information is used for configuring at least one of:

a plurality of start sub time domain resource indexes, where the plurality of start sub time domain resource indexes are used for determining: a PRACH transmission resource in a time domain resource for a configuration of a flexible TDD mode; and
one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

In a fourth aspect, an apparatus for determining a physical random access channel transmission resource is provided, which includes:

an execution module, configured to perform a target operation of a physical random access channel PRACH transmission resource based on a target configuration,
where the target configuration includes at least one of:

a configuration of a duplex mode and a configuration of a flexible time division duplex TDD mode; and
the target operation includes at least one of:

determining the validity of the PRACH transmission resource;
determining whether to transmit on the PRACH transmission resource; and
determining the PRACH transmission resource.

In a fifth aspect, an apparatus for determining a physical random access channel transmission resource is provided, which includes:

an execution module, configured to perform a target operation of a physical random access channel PRACH transmission resource based on a target configuration,
where the target configuration includes at least one of:

a configuration of a duplex mode and a configuration of a flexible time division duplex TDD mode; and
the target operation includes at least one of:

receiving a PRACH on a valid first PRACH transmission resource, where the validity of the first PRACH transmission resource is determined based on the target configuration;
receiving a PRACH on a second PRACH transmission resource, where the second PRACH transmission resource is a PRACH resource determined to have PRACH transmission thereon based on the target configuration; and
configuring a first configuration, where the first configuration is used for determining the PRACH transmission resource.

In a sixth aspect, an apparatus for determining a physical random access channel transmission resource is provided, which includes:

a sending module, configured to send configuration information to a terminal, where the configuration information is used for configuring at least one of:
a plurality of start sub time domain resource indexes, where the plurality of start sub time domain resource indexes are used for determining: a PRACH transmission resource in a time domain resource for a configuration of a flexible TDD mode; and
one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

In a seventh aspect, a terminal is provided, which includes a processor and a memory, where the memory stores programs or instructions runnable on the processor, and the programs or instructions, when executed by the processor, implement the steps of the method for determining a physical random access channel transmission resource of the first aspect provided by the embodiment of this application.

In an eighth aspect, a terminal is provided, which includes a processor and a communication interface, where the processor is configured to perform a target operation of a physical random access channel PRACH transmission resource based on a target configuration, where the target configuration includes at least one of: a configuration of a duplex mode and a configuration of a flexible time division duplex TDD mode; and the target operation includes at least one of: determining the validity of the PRACH transmission resource; determining whether to transmit on the PRACH transmission resource; and determining the PRACH transmission resource.

In a ninth aspect, a network-side device is provided, which includes a processor and a memory, where the memory stores programs or instructions runnable on the processor, and the programs or instructions, when executed by the processor, implement the steps of the method for determining a physical random access channel transmission resource of the second aspect provided by the embodiment of this application.

In a tenth aspect, a network-side device is provided, which includes a processor and a communication interface, where the processor is configured to perform a target operation of a physical random access channel PRACH transmission resource based on a target configuration, where the target configuration includes at least one of: a configuration of a duplex mode and a configuration of a flexible time division duplex TDD mode; and the target operation includes at least one of: receiving a PRACH on a valid first PRACH transmission resource, where the validity of the first PRACH transmission resource is determined based on the target configuration; receiving a PRACH on a second PRACH transmission resource, where the second PRACH transmission resource is a PRACH resource determined to have PRACH transmission thereon based on the target configuration; and configuring a first configuration, where the first configuration is used for determining the PRACH transmission resource.

In an eleventh aspect, a network-side device is provided, which includes a processor and a memory, where the memory stores programs or instructions runnable on the processor, and the programs or instructions, when executed by the processor, implement the steps of the method for determining a physical random access channel transmission resource of the third aspect provided by the embodiment of this application.

In a twelfth aspect, a network-side device is provided, which includes a processor and a communication interface, where the communication interface is configured to send configuration information to a terminal, and the configuration information is used for configuring at least one of: a plurality of start sub time domain resource indexes, where the plurality of start sub time domain resource indexes are used for determining: a PRACH transmission resource in a time domain resource for a configuration of a flexible TDD mode; or one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

In a thirteenth aspect, a readable storage medium is provided, where the readable storage medium stores programs or instructions, and the programs or instructions, when executed by a processor, implement the steps of the method for determining a physical random access channel transmission resource of the first aspect provided by the embodiment of this application, or the programs or instructions, when executed by the processor, implement the steps of the method for determining a physical random access channel transmission resource of the second aspect provided by the embodiment of this application, or the programs or instructions, when executed by the processor, implement the steps of the method for determining a physical random access channel transmission resource of the third aspect provided by the embodiment of this application.

In a fourteenth aspect, a chip is provided, where the chip includes a processor and a communication interface, the communication interface is coupled with the processor, and the processor is configured to run programs or instructions to implement the method for determining a physical random access channel transmission resource of the first aspect provided by the embodiment of this application, and the processor is configured to run programs or instructions to implement the method for determining a physical random access channel transmission resource of the second aspect or the third aspect provided by the embodiment of this application.

In a fifteenth aspect, a computer program/program product is provided, where the computer program/program product is stored in a storage medium, and the computer program/program product is executed by at least one processor to implement the steps of the method for determining a physical random access channel transmission resource of the first aspect provided by the embodiment of this application, or the computer program/program product is executed by at least one processor to implement the steps of the method for determining a physical random access channel transmission resource of the second aspect provided by the embodiment of this application, or the computer program/program product is executed by at least one processor to implement the steps of the method for determining a physical random access channel transmission resource of the third aspect provided by the embodiment of this application.

In a sixteenth aspect, a system for determining a resource is provided, which includes: a terminal and a network-side device, where the terminal is configured to perform the steps of the method for determining a physical random access channel transmission resource as described in the first aspect, and the network-side device is configured to perform the steps of the method for determining a physical random access channel transmission resource as described in the second aspect.

In the embodiment of this application, the terminal performs a target operation of a PRACH transmission resource based on a target configuration, where the target configuration includes at least one of: a configuration of a duplex mode and a configuration of a TDD mode; and the target operation includes at least one of: determining the validity of the PRACH transmission resource; determining whether to transmit on the PRACH transmission resource; and determining the PRACH transmission resource. In this way, at least one of the validity of the PRACH transmission resource, whether to transmit on the PRACH transmission resource, and the PRACH transmission resource can be determined based on the target configuration, thus improving the configuration flexibility of the resource for PRACH transmission.

**BRIEF DESCRIPTION OF THE DRAWINGS**

FIG. 1 is a block diagram of a wireless communication system applicable to an embodiment of this application;
FIG. 2 is a flowchart of a method for determining a physical random access channel transmission resource provided by an embodiment of this application;
FIG. 3 to FIG. 8 are schematic diagrams of resources provided by embodiments of this application;
FIG. 9 is a flowchart of another method for determining a physical random access channel transmission resource provided by an embodiment of this application;
FIG. 10 is a flowchart of another method for determining a physical random access channel transmission resource provided by an embodiment of this application;
FIG. 11 is a structural diagram of an apparatus for determining a physical random access channel transmission resource provided by an embodiment of this application;
FIG. 12 is a structural diagram of an apparatus for determining a physical random access channel transmission resource provided by an embodiment of this application;
FIG. 13 is a structural diagram of an apparatus for determining a physical random access channel transmission resource provided by an embodiment of this application;
FIG. 14 is a structural diagram of a communication device provided by an embodiment of this application;
FIG. 15 is a structural diagram of a terminal provided by an embodiment of this application; and
FIG. 16 is a structural diagram of a network-side device provided by an embodiment of this application.

**DETAILED DESCRIPTION**

Technical solutions in embodiments of this application will be clearly described below with reference to the drawings in the embodiments of this application. Apparently, the described embodiments are merely some rather than all of the embodiments of this application. All other embodiments obtained by those skilled in the art based on the embodiments of this application still fall within the scope of protection of this application.

Terms such as "first" and "second" in the description and claims of this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and do not limit the number of the objects; for example, the number of first objects may be one or more. In addition, the expression "and/or" in the description and claims represents at least one of connected objects, and the character "/" generally represents that the associated objects are in an 'or' relationship.

It is worth pointing out that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. Terms "system" and "network" in the embodiments of this application are usually interchangeable for use. The technologies described not only can be applied to the systems and radio technologies mentioned above, but also can be applied to other systems and radio technologies. The following description describes a new radio (New Radio, NR) system for example purposes and uses NR terminology in most of the following description, but these technologies can also be applied to applications other than NR system applications, such as 6th generation (6th Generation, 6G) communication systems.

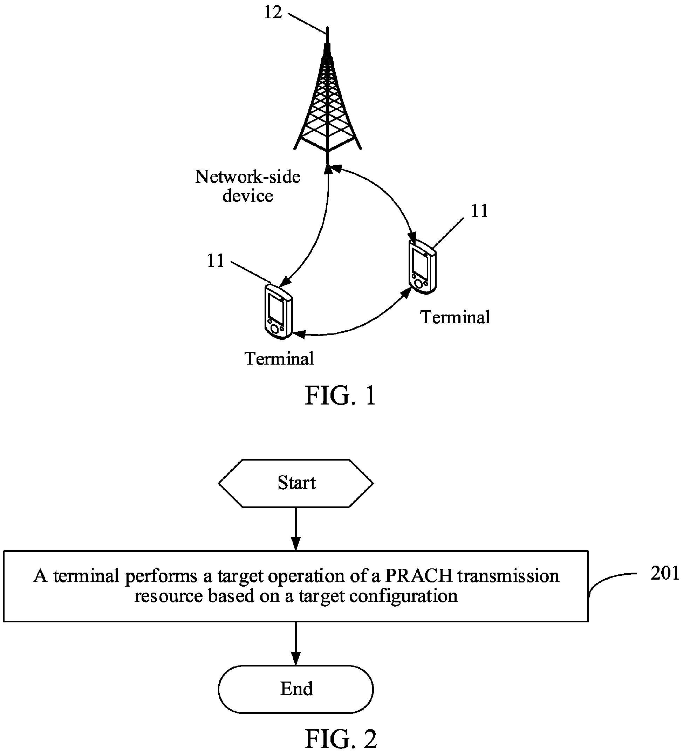

FIG. 1 illustrates a block diagram of a wireless communication system applicable to an embodiment of this application. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine or a self-service machine. The wearable device includes: a smart watch, a smart bracelet, smart headphones, smart glasses, a smart jewelry (smart bangle, smart chain bracelet, smart ring, smart necklace, smart anklet, smart ankle, and the like), a smart wristband, smart clothing, and the like. It is to be noted that the specific type of the terminal 11 is not limited in the embodiments of this application. The network-side device 12 may include an access network device or a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, or a wireless fidelity (Wireless Fidelity, Wi-Fi) node, and the like. The base station may be referred to as node B, evolved node B (eNB), access point, base transceiver station (Base Transceiver Station, BTS), radio base station, radio transceiver, basic service set (Basic Service Set, BSS), extended service set (Extended Service Set, ESS), home node B, home evolved node B, transmission reception point (Transmission Reception Point, TRP), or some other suitable terms in the field, as long as the same technical effect is achieved. The base station is not limited to specific technical terms. It is to be noted that description is made by using only a base station in an NR system as an example in the embodiments of this application, but the specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It is to be noted that description is made by using only a core network device in an NR system as an example in the embodiments of this application, but the specific type of the core network device is not limited.

A method and apparatus for determining a physical random access channel transmission resource, and a terminal provided by the embodiments of this application will be described below in detail through some embodiments and application scenarios thereof in combination with the drawings.

In some implementations, a resource for PRACH repetition may overlap with a downlink subband or certain downlink symbol in an evolved duplex mode or enhanced flexible TDD mode. Therefore, in the embodiments of this application, the validity of a PRACH transmission resource is determined and/or whether to transmit on the PRACH transmission resource is determined based on at least one of a configuration of a duplex mode and a configuration of a flexible TDD mode, thus making the resource for PRACH transmission more flexible, because the resource ultimately used for PRACH transmission is determined by the validity and/or determining whether to transmit. In addition, it can also avoid conflicts caused by the situation that the terminal simultaneously performs downlink transmission and PRACH transmission on overlapping resources.

In addition, in the embodiments of this application, the PRACH transmission resource may be determined based on at least one of the configuration of the duplex mode and the configuration of the flexible TDD mode. Therefore, since the PRACH transmission resource is determined based on at least one of the configuration of the duplex mode and the configuration of the flexible TDD mode, a more flexible PRACH transmission resource may be determined, for example, a resource that does not overlap with a downlink subband or certain downlink symbol is determined as the PRACH transmission resource.

Please refer to FIG. 2. FIG. 2 is a flowchart of a method for determining a physical random access channel transmission resource provided by an embodiment of this application. As shown in FIG. 2, the method includes the following step:

Step 201: A terminal performs a target operation of a PRACH transmission resource based on a target configuration, where the target configuration includes at least one of:

a configuration of a duplex mode and a configuration of a flexible TDD mode; and

the target operation includes at least one of:

> determining the validity of the PRACH transmission resource;
> determining whether to transmit on the PRACH transmission resource; and
> determining the PRACH transmission resource.

The PRACH transmission resource may be a resource used for PRACH repetition, that is, the PRACH transmission resource includes a PRACH repetition resource. In addition, the PRACH transmission resource is one or more PRACH transmission resources.

The configuration of the duplex mode may be a configuration used for configuring a resource for the duplex mode, for example, a time domain resource configuration of the duplex mode or a frequency domain resource configuration of the duplex mode.

The configuration of the flexible TDD mode is a configuration used for configuring a resource for the flexible TDD mode, for example, a time domain resource configuration of the flexible TDD mode or a frequency domain resource configuration of the flexible TDD mode. Flexible TDD may refer to the existence of a flexible resource that can be used for both uplink transmission and downlink transmission.

The determining the validity of the PRACH transmission resource may be to determine whether the PRACH transmission resource is valid. A valid PRACH transmission resource can be used for PRACH transmission, and an invalid PRACH transmission resource cannot be used for PRACH transmission.

The determining the PRACH transmission resource may be to determine a resource for PRACH transmission.

In one implementation, the target operation is to determine the validity of the PRACH transmission resource. In this case, the PRACH transmission resource may be a PRACH transmission resource determined based on the target configuration, or the PRACH transmission resource may be a PRACH transmission resource configured by adopting a protocol defined manner, such as pre-configured.

In one implementation, the target operation is to determine whether to transmit on the PRACH transmission resource. In this case, the PRACH transmission resource may be a PRACH transmission resource determined based on the target configuration, or the PRACH transmission resource may be a PRACH transmission resource configured by adopting a protocol defined manner, such as pre-configured.

In one implementation, the target operation is to determine the validity of the PRACH transmission resource and determine whether to transmit on the PRACH transmission resource. In this case, the PRACH transmission resource may be a PRACH transmission resource determined based on the target configuration, or the PRACH transmission resource may be a PRACH transmission resource configured by adopting a protocol defined manner, such as pre-configured.

In one implementation, the target operation is to determine the PRACH transmission resource and determine the validity of the PRACH transmission resource.

In one implementation, the target operation is to determine the PRACH transmission resource and determine whether to transmit on the PRACH transmission resource.

It is to be noted that in the embodiments of this application, the PRACH resource may be a PRACH resource for a four-step random access channel (Random Access Channel, RACH), or a PRACH resource for a two-step RACH.

In the embodiments of this application, through the above steps, at least one of the validity of the PRACH transmission resource, whether to transmit on the PRACH transmission resource, and the PRACH transmission resource may be determined based on the target configuration, thus improving the configuration flexibility of the resource for PRACH transmission.

In an optional implementation, the method further includes:

PRACH transmission is performed based on the target operation.

For example, the PRACH is transmitted on the PRACH transmission resource determined to be valid, or the PRACH is transmitted on the PRACH transmission resource determined to perform PRACH transmission, or the PRACH is transmitted on the determined PRACH transmission resource.

In this implementation, flexible PRACH transmission can be supported to improve the transmission performance of the terminal.

As an optional implementation, the configuration of the flexible TDD mode includes a configuration of an enhanced flexible TDD mode.

As an optional implementation, the configuration of the duplex mode includes a configuration of an evolved duplex mode.

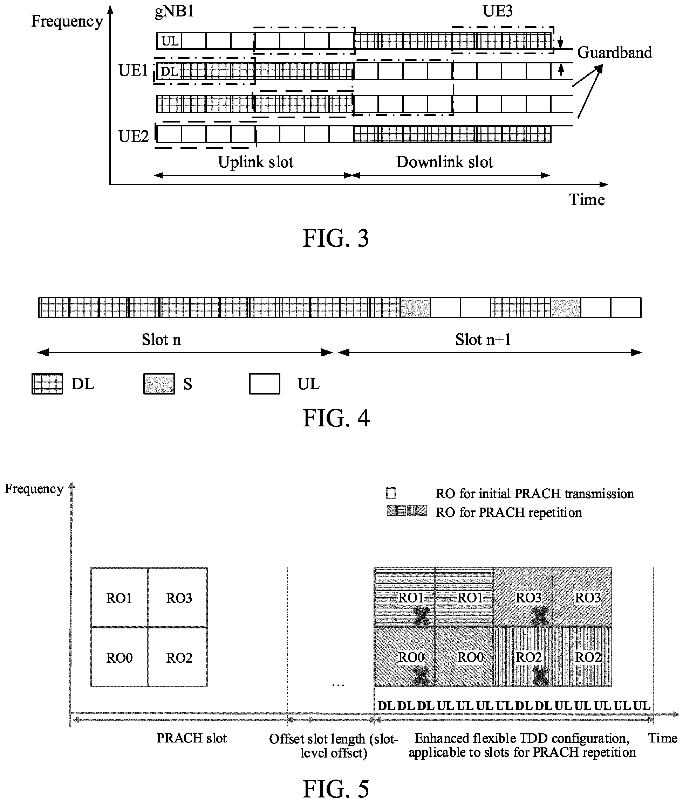

The enhanced flexible TDD mode may be a flexible TDD mode that is enhanced on the basis of a flexible TDD mode defined by certain protocols (e.g., Rel-17). The enhanced flexible TDD mode refers to a more flexible configuration of uplink and downlink resources, i.e., a more flexible TDD mode. For example, in the enhanced flexible TDD mode, a plurality of segments of uplink transmissions are supported within one slot. For example, as shown in FIG. 3, two segments of uplink transmissions are supported within one slot, where s represents a flexible symbol that can be used for performing both uplink transmission and downlink transmission.

In addition, the configuration of the enhanced flexible TDD mode may also be referred to as a configuration supporting the enhanced flexible TDD mode.

The evolved duplex mode may be a duplex mode that is evolved on the basis of a duplex mode defined by certain protocols (e.g., Rel-17). A configuration of the evolved duplex mode is more flexible. In the present embodiment, the evolved duplex mode may also be referred to as a flexible division duplex (flexible division duplex, XDD) or non-overlapping subband full duplex mode, or may also be referred to as a cross division duplex (cross division duplex). In the configuration of the evolved duplex mode, different subbands (subband) have different configurations at certain moments, or different subbands have different configurations at the same moment. For example, as shown in FIG. 4, a bandwidth part (Bandwidth Part, BWP) may be divided into a plurality of subbands. At the same moment, different subbands may be used for uplink or downlink transmission.

In the embodiments of this application, one carrier (carrier) may be divided into one or more BWPs, and one BWP may be divided into one or more subbands.

The configuration of the evolved duplex mode may also be referred to as a configuration supporting the evolved duplex mode.

In this implementation, since the configuration of the flexible TDD mode includes the configuration of the enhanced flexible TDD mode, and/or the configuration of the duplex mode includes the configuration of the evolved duplex mode, more flexible PRACH transmission can be supported.

It is to be noted that in the embodiments of this application, the configuration of the flexible TDD mode is not limited to include the configuration of the enhanced flexible TDD mode, and may also include a configuration of a non-enhanced flexible TDD mode; and the configuration of the duplex mode is not limited to include the configuration of the evolved duplex mode, and may also include a configuration of a non-evolved duplex mode.

As an optional implementation, the determining the validity of the PRACH transmission resource includes:

the validity of the PRACH transmission resource in a case of contention based random access (Contention Based Random Access, CBRA) is determined; and
the validity of the PRACH transmission resource in a case of contention free random access (Contention Free Random Access, CFRA) is determined.

In this implementation, the validity of the PRACH transmission resource in the case of CBRA may be determined, so as to avoid conflicts in the PRACH transmission resource in the case of CBRA; and the validity of the PRACH transmission resource in the case of CFRA may be determined, so as to avoid conflicts in the PRACH transmission resource in the case of CFRA.

Optionally, the configuration of the duplex mode includes a configuration of a cell specific duplex mode, a configuration of a UE specific full duplex mode, a configuration of a cell specific full duplex mode, or a configuration of a semi-static full duplex mode; and
the determining the validity of the PRACH transmission resource includes:

the validity of the PRACH transmission resource in the case of CBRA is determined based on the configuration of the cell specific duplex mode; or
the validity of the PRACH transmission resource in the case of CBRA is determined based on at least one of the configuration of the UE specific full duplex mode and the configuration of the flexible TDD mode; or
the validity of the PRACH transmission resource in the case of CBRA is determined based on at least one of the configuration of the cell specific full duplex mode and the configuration of the flexible TDD mode; or
the validity of the PRACH transmission resource in the case of CBRA is determined based on at least one of the configuration of the semi-static full duplex mode and the configuration of the flexible TDD mode.

The configuration of the cell specific duplex mode may include a configuration of a duplex mode defined by certain protocols, and the cell specific full duplex mode may be a configuration of an evolved cell specific full duplex mode.

The configuration of the flexible TDD mode may be a configuration of a cell specific flexible TDD mode, or a configuration of a UE specific flexible TDD mode.

The determining the validity of the PRACH transmission resource in the case of CBRA may be to determine that the PRACH transmission resource overlapping with a downlink (Downlink, DL) subband or DL symbol is valid, or determine that the PRACH transmission resource overlapping with the DL subband or DL symbol is invalid, where the DL subband and DL symbol are resources of at least one of the configuration of the duplex mode and the configuration of the flexible TDD mode.

In this implementation, since the validity of the PRACH transmission resource in the case of CBRA is determined, the valid PRACH transmission resource can be determined, thus improving the utilization rate of the resource and avoiding the waste of synchronization signal block (Synchronization Signal Block, SSB) resources caused by the mapping of SSB to some practically unusable PRACH transmission resources.

For example, in some embodiments, the validity of the PRACH repetition resource may be based solely on the configuration of the cell specific duplex mode (including the configuration of the duplex mode defined by certain protocols and/or the configuration of the evolved full duplex mode and/or the configuration of the enhanced flexible TDD mode), thus improving the utilization rate of the resource and preventing SSB from mapping to some practically unusable PRACH resources.

Optionally, the terminal indicates through the PRACH that the terminal supports at least one of:
a capability of supporting the evolved full duplex mode and a capability of supporting the enhanced flexible TDD mode.

Indicating that the terminal supports at least one of the capabilities when sending the PRACH may be to indicate at least one of the capabilities through the resource for sending the PRACH or a preamble of the PRACH.

The resource for sending the PRACH may be a specific PRACH resource, such as a PRACH resource including a physical random access channel transmission occasion (PRACH transmission occasion, RO).

Indicating that the terminal supports at least one of the capabilities when sending the PRACH may be to indicate that the terminal supports at least one of the capabilities when sending the PRACH in the case of CBRA.

In this implementation, by indicating at least one of the capabilities when sending the PRACH, that is, when the terminal transmits the PRACH through the PRACH resource, the network side can determine at least one of the capability of the terminal in supporting the evolved full duplex mode and the capability in supporting the enhanced flexible TDD mode.

In this implementation, by indicating at least one of the capabilities when sending the PRACH, the network-side device can be informed of the capabilities of the terminal, so as to better communicate with the terminal based on the capabilities of the terminal, thus improving the communication performance of the terminal.

For example, in some embodiments, in a case that the capability of the terminal in supporting the evolved full duplex mode and/or the capability in supporting the enhanced flexible TDD mode is indicated through an additional PRACH resource, the additional PRACH resource may also include a resource for indicating PRACH repetition. In this case, the validity of the resource for sending PRACH repetition may be determined based on the configuration of the cell specific or semi-static evolved full duplex mode and/or the configuration of the enhanced flexible TDD.

It is to be noted that in the embodiments of this application, a specific preamble (preamble), or a specific initial BWP, or a specific subband may also be used for indicating that the terminal supports at least one of the capabilities.

Optionally, the configuration of the duplex mode includes the configuration of the cell specific full duplex mode or the configuration of the semi-static full duplex mode, and the determining the validity of the PRACH transmission resource includes:

the validity of the PRACH transmission resource in the case of CFRA is determined based on at least one of the configuration of the cell specific full duplex mode and the configuration of the flexible TDD mode; or

the validity of the PRACH transmission resource in the case of CFRA is determined based on at least one of the configuration of the semi-static (semi-static) full duplex mode and the configuration of the flexible TDD mode.

The configuration of the flexible TDD mode may be a configuration of a dynamic or semi-static flexible TDD mode. In addition, the configuration of the flexible TDD mode may be the configuration of the cell specific flexible TDD mode, or the configuration of the UE specific flexible TDD mode.

The determining the validity of the PRACH transmission resource in the case of CFRA may be to determine that the PRACH transmission resource overlapping with a DL subband or DL symbol is valid, or determine that the PRACH transmission resource overlapping with the DL subband or DL symbol is invalid, where the DL subband and DL symbol are resources of at least one of the configuration of the duplex mode and the configuration of the flexible TDD mode.

In this implementation, since the validity of the PRACH transmission resource in the case of CFRA is determined, the valid PRACH transmission resource can be determined, thus improving the utilization rate of the resource and avoiding the waste of the SSB resources caused by the mapping of SSB to some practically unusable PRACH transmission resources.

For example, in some embodiments, the validity of the RO may be determined based on the configuration of the cell specific or semi-static evolved full duplex mode and/or the configuration of the enhanced flexible TDD.

In the embodiments of this application, for CFRA, the network side may determine whether the terminal has the capability to support the evolved full duplex mode and/or support the enhanced flexible TDD mode through the terminal's capability report in a radio resource control (Radio Resource Control, RRC) connected state.

As an optional implementation, the determining whether to transmit on the PRACH transmission resource includes:
whether to transmit on the PRACH transmission resource in a case of contention based random access CBRA is determined.

In a case that it is determined to transmit on the PRACH transmission resource, the terminal transmits the PRACH on the PRACH transmission resource. In a case that it is determined not to transmit on the PRACH transmission resource, the terminal abandons transmitting the PRACH on the PRACH transmission resource.

In this implementation, since whether to transmit on the PRACH transmission resource in the case of contention based random access CBRA can be determined, errors in PRACH transmission can be avoided, thus improving the transmission performance of the PRACH.

Optionally, the configuration of the duplex mode includes at least one of a configuration of a UE specific (UE specific) full duplex mode and a configuration of a dynamic full duplex mode, and the determining whether to transmit on the PRACH transmission resource in the case of contention based random access CBRA includes:

whether to transmit on the PRACH transmission resource in the case of CBRA is determined based on at least one of the configuration of the UE specific full duplex mode and the configuration of the flexible TDD mode; or

whether to transmit on the PRACH transmission resource in the case of CBRA is determined based on at least one of the configuration of the dynamic full duplex mode and the configuration of the flexible TDD mode.

The configuration of the UE specific full duplex mode may be a configuration of a UE specific evolved full duplex mode.

In this implementation, whether to actually transmit on the PRACH transmission resource in the case of CBRA can be accurately determined based on at least one of the configuration of the UE specific full duplex mode and the configuration of the flexible TDD mode.

The configuration of the dynamic full duplex mode may be a configuration of a full duplex mode indicated by downlink control information (Downlink Control Information, DCI) or media access control control element (Media Access Control Control Element, MAC CE). In addition, the configuration of the flexible TDD mode may also be a configuration of a dynamic flexible TDD mode, such as a configuration of a flexible TDD mode dynamically indicated by DCI or MAC CE.

In this implementation, whether to actually transmit on the PRACH transmission resource in the case of CBRA can be accurately determined based on at least one of the configuration of the dynamic full duplex mode and the configuration of the flexible TDD mode.

Optionally, in a case that DCI or MAC CE indicates at least one of the configuration of the full duplex mode and the configuration of the flexible TDD mode, the terminal abandons sending the PRACH on a first PRACH transmission resource, or the terminal sends the PRACH on the first PRACH transmission resource.

The first PRACH transmission resource overlaps with a downlink subband resource, or the first PRACH transmission resource overlaps with a downlink time domain resource.

The downlink time domain resource may be a downlink symbol.

The terminal may determine based on a network-side configuration: to abandon sending the PRACH on the first PRACH transmission resource, or to send the PRACH on the first PRACH transmission resource; or

the terminal may determine on its own: to abandon sending the PRACH on the first PRACH transmission resource, or to send the PRACH on the first PRACH transmission resource; or

to abandon sending the PRACH on the first PRACH transmission resource in a case that the terminal has already sent the PRACH in a PRACH repetition; and to send the PRACH on the first PRACH transmission resource in a case that the terminal has not sent the PRACH in the PRACH repetition.

The DCI may be group-common DCI or UE specific DCI.

In this implementation, whether to transmit on the PRACH transmission resource may be flexibly determined, so as to support more flexible PRACH transmission.

For example, in some embodiments, in a case that the configuration of the evolved full duplex mode and/or the configuration of the enhanced flexible TDD mode dynamically indicated by DCI or MAC CE is used, the terminal may abandon sending the PRACH on the resource indicated as a downlink subband or downlink symbol, or the terminal may continuously send the PRACH on the resource indicated as the downlink subband or downlink symbol, and in this case, the resource indicated as the DL resource is still considered as an uplink resource.

Whether to abandon the PRACH transmission may be further determined based on a network configuration or terminal implementation; or

whether to abandon the PRACH transmission depends on whether the PRACH has performed repetition (repetition). For example, as long as a PRACH that has performed repetition encounters a downlink resource, it may abandon the PRACH transmission and prioritize the resource for downlink transmission. In addition, the abandoned PRACH transmission is counted into the number of times of PRACH repetitions or not counted into the number of times of PRACH repetitions.

In the embodiments of this application, some repetitions (repetitions) of the PRACH transmission may be transmitted on a shared RO, and the remaining portion of the PRACH repetitions may be transmitted on an additionally configured RO. That is, the PRACH transmission resource may include a shared RO and an additionally configured RO. In this case, the validity of the PRACH transmission resource and whether to actually transmit the PRACH may have the same rule or different rules to the shared RO and the additionally configured RO. For details, reference may be made to the following implementations.

As an optional implementation, in a case that the PRACH transmission resource includes a shared RO and an additionally configured RO, the determining the validity of the PRACH transmission resource includes:
the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband (guardband) determined by the configuration of the duplex mode.

In the embodiments of this application, the shared RO may be an RO that can send both repeated and non-repeated PRACH, that is, the initial transmission and repetition of PRACH may both be performed on the shared RO, and the additionally configured RO is an RO additionally configured on the basis of the shared RO and may be specifically for PRACH repetition, that is, the additionally configured RO is used for the repetition of the additionally configured RO.

The situation that the RO overlaps with the downlink time domain resource determined by the configuration of the flexible TDD mode may be that the RO partially or fully overlaps with the downlink time domain resource determined by the configuration of the flexible TDD mode.

In this implementation, it can be determined that at least one of the RO is invalid, thus avoiding conflicts between PRACH and downlink transmission. In addition, in this implementation, in a case that the shared RO falls within at least one of the above cases, whether the shared RO is valid or invalid may be determined.

For example, in some embodiments, the additionally configured resource for PRACH repetition is invalid in one or more of the following cases:

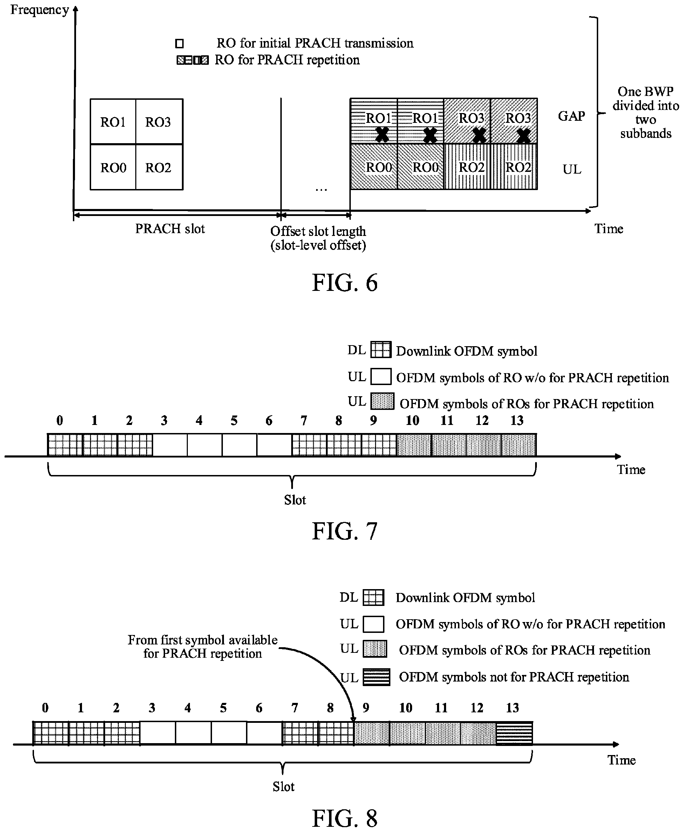

the RO at least partially overlaps with a downlink symbol determined by the configuration of the enhanced flexible TDD mode; for example, as shown in FIG. 5, in additionally configured four columns of ROs, the first column from left to right (fully overlapping with DL) and the third column (partially overlapping with DL) are invalid;
a gap (gap) between the RO and a downstream symbol is smaller than or not greater than a first value N_gap; and
at least part of bandwidth of the RO overlaps with a downlink subband and/or guardband determined by the configuration of the evolved full duplex mode; for example, in FIG. 6, BWP is divided into two subbands, and there is a gap used as a guardband between the two subbands. In additionally configured two rows of ROs, the upper row of ROs are considered invalid because of overlapping with the DL subband and guardband.

As an optional implementation, in a case that the PRACH transmission resource includes a shared RO and an additionally configured RO, the determining the PRACH transmission resource includes:
the shared RO and the additionally configured RO that are semi-statically configured by higher-layer signaling are determined, where the shared RO and the additionally configured RO are configured in at least one of the following resources:
an uplink subband or a flexible subband (flexible subband).

In this implementation, the shared RO and the additionally configured RO may be configured in the uplink subband and flexible subband, so that the RO can be prevented from conflicting with the downlink resource, so as to improve the transmission reliability of PRACH.

For example, in some embodiments, for the full duplex mode or flexible duplex mode, the PRACH transmission resource semi-statically configured by higher-layer signaling is only within the uplink subband or flexible subband, that is, the PRACH transmission resource cannot be configured in the downlink subband or guardband.

As an optional implementation, in a case that the PRACH transmission resource includes a shared RO and an additionally configured RO, the shared RO is configured to transmit first N PRACHs in a PRACH repetition and the additionally configured RO is configured to transmit remaining PRACHs in the PRACH repetition, the determining whether to transmit on the PRACH transmission resource includes:
the additionally configured RO abandons PRACH transmission in at least one of the following cases:

the RO overlaps with a downlink subband;
the RO overlaps with a guardband; and
the RO overlaps with a downlink time domain resource.

The downlink time domain resource may be a downlink symbol.

In this implementation, it can be determined that at least one of the ROs abandons PRACH transmission, thus avoiding conflicts between PRACH and downlink transmission. In addition, in this implementation, in a case that the shared RO falls within at least one of the above cases, whether to transmit or not to transmit PRACH on the shared RO may be determined.

Optionally, the method further includes:

the terminal determines whether the RO that abandons the PRACH transmission is mapped to the shared RO according to a configuration mode of at least one of the downlink subband, the guardband and the downlink time domain resource; or

determines whether the RO that abandons the PRACH transmission is mapped to the shared RO according to an access mode of the PRACH.

The situation that the terminal determines whether the RO that abandons the PRACH transmission is mapped to the shared RO according to a configuration mode of at least one of the downlink subband, the guardband and the downlink time domain resource may be to determine that the RO that abandons the PRACH transmission is not mapped to the shared RO in a case that at least one of the downlink subband, the guardband and the downlink time domain resource is a configuration of a cell specific evolved full duplex mode, or determine that the RO that abandons the PRACH transmission is not mapped to the shared RO in a case that at least one of the downlink subband, the guardband and the downlink time domain resource is a configuration of an enhanced flexible TDD mode. In other cases, it may be mapped.

The determining whether the RO that abandons the PRACH transmission is mapped to the shared RO according to the access mode of the PRACH may be to determine that it is not mapped in the case of CBRA and it is mapped in the case of CFRA.

In this implementation, since whether the RO that abandons the PRACH transmission is mapped to the shared RO can be determined, it can support the PRACH transmission resource with higher flexibility.

In some embodiments, in a case that the first or first several PRACH repetitions are transmitted in the shared RO (that is, both repeated PRACH and non-repeated PRACH sequences can be sent), and the remaining PRACH repetitions are transmitted in separate ROs (that is, the additionally configured RO), and it at least partially overlaps with a downlink subband and/or guardband and/or downlink symbol, there may be one or more of the following rules:

the separate RO abandons the PRACH transmission, but is still mapped to the shared RO; and

the separate RO is not mapped to the shared RO.

One of the above two situations depends on whether the downlink subband and/or guardband and/or downlink symbol is configured specifically by a cell, for example, the overlapping RO determined by the configuration of the cell specific evolved full duplex mode and/or the configuration of the cell specific enhanced flexible TDD mode is considered not to be mapped to the shared RO;

or, one of the above two situations depends on whether the random access is CFRA or CBRA, for example, in the case of CFRA, the overlapping RO determined by the configuration of the evolved full duplex mode and/or the enhanced flexible TDD mode is considered not to be mapped to the shared RO.

As an optional implementation, the determining the PRACH transmission resource includes:

the PRACH transmission resource is determined based on a plurality of start sub time domain resource indexes for a flexible TDD time domain resource of the configuration of the flexible TDD mode; or

the PRACH transmission resource is determined based on one start sub time domain resource index and a plurality of numbers of ROs for PRACH repetition for the flexible TDD time domain resource of the configuration of the flexible TDD mode.

The flexible TDD time domain resource may be a flexible TDD slot, or a flexible TDD subframe, or a flexible TDD subslot.

The start sub time domain resource index may be a resource index used for determining a start time domain position of a resource (specifically at least one RO) for PRACH transmission. For example, the start sub time domain resource index may be a start symbol index (start symbol index), so that a start symbol of the resource for PRACH transmission can be determined through the start symbol index; or, in some implementations, it may also be a start subslot index or the like, which is not limited here. Through the plurality of start sub time domain resource indexes, a plurality of resources for PRACH transmission can be determined, that is, the PRACH transmission resources determined based on the plurality of start sub time domain resource indexes are a plurality of resources for PRACH transmission, such as a plurality of sets of ROs. Each set of ROs includes at least one RO.

The determining the PRACH transmission resource based on the plurality of start sub time domain resource indexes may be to determine at least one RO based on each start sub time domain resource index, and the numbers of ROs for PRACH repetition corresponding to the start sub time domain resource indexes may be the same or different. For example, the determining the PRACH transmission resource based on the plurality of start sub time domain resource indexes may be to determine the PRACH transmission resource based on the plurality of start sub time domain resource indexes and one number of ROs for PRACH repetition, that is, the numbers of ROs reached by each start sub time domain resource index are the same; or, the determining the PRACH transmission resource based on the plurality of start sub time domain resource indexes may be to determine the PRACH transmission resource based on the plurality of start sub time domain resource indexes and the plurality of numbers of ROs for PRACH repetition, that is, the numbers of ROs reached by each start sub time domain resource index are different.

The plurality of numbers of ROs for PRACH repetition may be the same or different numbers of ROs for PRACH repetition.

In this implementation, a plurality of PRACH transmission resources can be determined based on the plurality of start sub time domain resource indexes or one start sub time domain resource index and the plurality of numbers of ROs for PRACH repetition, thus improving the transmission performance of the PRACH.

It is to be noted that the plurality of start sub time domain resource indexes may be dynamically configured or pre-configured on the network side, or determined through looking up a table; and the one start sub time domain resource index and the plurality of numbers of ROs for PRACH repetition may be dynamically configured or pre-configured on the network side, or determined through looking up a table.

Optionally, the flexible TDD time domain resource is a flexible TDD slot, and the start sub time domain resource index is a start symbol index,
where each start sub time domain resource index is used for determining at least one RO.

In this implementation, more ROs can be determined based on start symbol indexes, thus improving the transmission performance of the PRACH.

For example, in some embodiments, for enhanced flexible TDD slots, a resource for PRACH repetition may be determined by adopting the following manner:
for a PRACH configuration index (PRACH configuration index), a PRACH slot for sending PRACH repetition is determined based on a first start symbol index and a second start symbol index.

For example, as shown in Table 1 and FIG. 7, it is assumed that a 15kHz subcarrier gap is adopted, a preamble format (Preamble format) for a PRACH configuration index n is A1, each time domain RO (also referred to as PRACH occasion or PRACH transmission occasion) occupies two OFDM symbols, the period of a PRACH configuration (PRACH configuration) is 160 ms, and PRACH slots are configured in the fifth and tenth 1 ms of the first 10 ms of each period. Two time domain ROs are configured for initial PRACH transmission (initial PRACH transmission) in the fourth to seventh OFDM symbols of 1 ms, and two time domain ROs are further configured for PRACH repetition in four consecutive OFDM symbols starting from the eleventh symbol.

Table 1:

| PRACH configuration index | Preamble format | $n_f$ mod $x$ = $y$ | | Number of subframes | Start symbol | Start symbol for PRACH repetition | Number of PRACH slots in one subframe | $N_t^{RA,slot}$, | $N_{dur}^{RA}$, |
|---|---|---|---|---|---|---|---|---|---|
| | | $x$ | $y$ | | | | | | |
| ... | | | | | | | | | |
| n | A1 | 16 | 0 | 4,9 | 3 | 10 | 1 | 2 | 2 |
| ... | | | | | | | | | |

$N_t^{RA,slot}$ represents the number of ROs for PRACH repetition in one PRACH slot, and $N_{dur}^{RA}$ represents the number of PRACH consecutive symbols.

Optionally, in a case that the PRACH transmission resource is determined based on one start sub time domain resource index and a plurality of numbers of ROs for PRACH repetition,
the start sub time domain resource index and a first number of ROs for PRACH repetition are used for determining a first RO, and a second number of ROs for PRACH repetition and a first available symbol after the first RO are used for determining a second RO.

The first RO is one or more ROs determined based on the start sub time domain resource index and the first number of ROs for PRACH repetition.

In this implementation, the second RO can be determined based on the first available symbol after the first RO, so that too excessive start sub time domain resource indexes can be prevented from being introduced, thus reducing the complexity.

For example, in some embodiments, for enhanced flexible TDD slots, a resource for PRACH repetition may be determined by adopting the following manner:

the second number of ROs for PRACH repetition (number of ROs for PRACH repetition) is introduced.

For example, as shown in Table 2 and FIG. 8, it is assumed that a 15kHz subcarrier gap is adopted, a preamble format (Preamble format) for a PRACH configuration index n is A1, each time domain RO (also referred to as PRACH occasion) occupies two OFDM symbols, the period of a PRACH configuration (PRACH configuration) is 160 ms, PRACH slots are configured in the fifth and tenth 1 ms of the first 10 ms of each period, two time domain ROs are configured for initial PRACH transmission (initial PRACH transmission) in the fourth to seventh OFDM symbols of 1 ms, and two time domain ROs are further configured for PRACH repetition in the first available (available) symbol, i.e., four consecutive OFDM symbols starting from the tenth symbol.

Table 2:

| PRACH configuration index | Preamble format | $n_f$ mod $x$ $=y$ | | Number of subframes | Start symbol | Number of PRACH slots in one subframe | $N_t^{RA,slot}$ | Number of ROs for PRACH repetition in one PRACH slot | $N_{dur}^{RA}$ |
| | | $x$ | $y$ | | | | | | |
|---|---|---|---|---|---|---|---|---|---|
| ... | | | | | | | | | |
| n | A1 | 16 | 0 | 4,9 | 3 | 1 | 2 | 2 | 2 |
| ... | | | | | | | | | |

In the embodiment of this application, the terminal performs a target operation of a PRACH transmission resource based on a target configuration, where the target configuration includes at least one of: a configuration of a duplex mode and a configuration of a TDD mode; and the target operation includes at least one of: determining the validity of the PRACH transmission resource; determining whether to transmit on the PRACH transmission resource; and determining the PRACH transmission resource. In this way, at least one of the validity of the PRACH transmission resource, whether to transmit on the PRACH transmission resource, and the PRACH transmission resource can be determined based on the target configuration, thus improving the configuration flexibility of the resource for PRACH transmission.

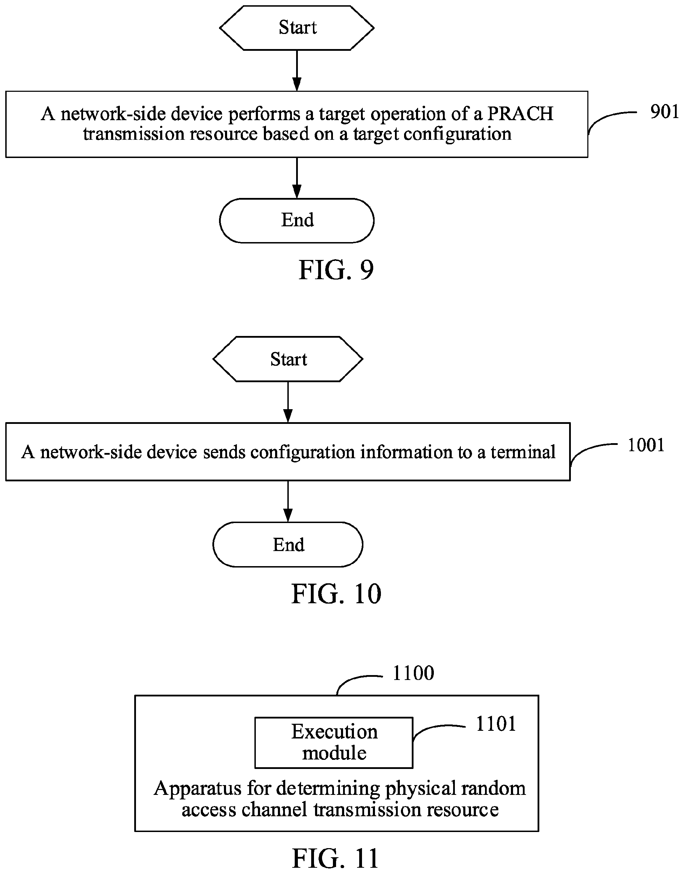

Please refer to FIG. 9. FIG. 9 is a flowchart of another method for determining a physical random access channel transmission resource provided by an embodiment of this application. As shown in FIG. 9, the method includes:

Step 901: A network-side device performs a target operation of a physical random access channel PRACH transmission resource based on a target configuration,

where the target configuration includes at least one of:

a configuration of a duplex mode and a configuration of a flexible time division duplex TDD mode; and
the target operation includes at least one of:

receiving a PRACH on a valid first PRACH transmission resource, where the validity of the first PRACH transmission resource is determined based on the target configuration; and
receiving a PRACH on a second PRACH transmission resource, where the second PRACH transmission resource is a PRACH resource determined to have PRACH transmission thereon based on the target configuration.

Optionally, the configuration of the duplex mode includes a configuration of a cell specific duplex mode, a configuration of a UE specific full duplex mode, a configuration of a cell specific full duplex mode, or a configuration of a semi-static full duplex mode; and

in a case of contention based random access CBRA,
the validity of the first PRACH transmission resource is determined based on the configuration of the cell specific duplex mode; or
the validity of the first PRACH transmission resource is determined based on at least one of the configuration of the UE specific full duplex mode and the configuration of the flexible TDD mode; or

the validity of the first PRACH transmission resource is determined based on at least one of the configuration of the cell specific full duplex mode and the configuration of the flexible TDD mode; or

the validity of the first PRACH transmission resource is determined based on at least one of the configuration of the semi-static full duplex mode and the configuration of the flexible TDD mode.

Optionally, the network-side device receives capability information of a terminal, the capability information is indicated through the PRACH, and the capability information includes at least one of:

a capability of supporting an evolved full duplex mode and a capability of supporting an enhanced flexible TDD mode.

Optionally, the configuration of the duplex mode includes the configuration of the cell specific full duplex mode or the configuration of the semi-static full duplex mode; and

in the case of contention based random access CBRA,

the validity of the first PRACH transmission resource is determined based on at least one of the configuration of the cell specific full duplex mode and the configuration of the flexible TDD mode; or

the validity of the first PRACH transmission resource is determined based on at least one of the configuration of the semi-static full duplex mode and the configuration of the flexible TDD mode.

Optionally, the configuration of the duplex mode includes at least one of the configuration of the UE specific full duplex mode and a configuration of a dynamic full duplex mode;

the second PRACH transmission resource is determined to have PRACH transmission thereon based on at least one of the configuration of the UE specific full duplex mode and the configuration of the flexible TDD mode; or

the second PRACH transmission resource is determined to have PRACH transmission thereon based on at least one of the configuration of the UE specific full duplex mode and the configuration of the flexible TDD mode; or

the second PRACH transmission resource is determined to have PRACH transmission thereon based on at least one of the configuration of the dynamic full duplex mode and the configuration of the flexible TDD mode.

Optionally, in a case that downlink control information DCI or media access control control element MAC CE indicates at least one of the configuration of the full duplex mode and the configuration of the flexible TDD mode, it is determined that the second PRACH transmission resource has PRACH transmission thereon,

where the second PRACH transmission resource overlaps with a downlink subband resource, or the second PRACH transmission resource overlaps with a downlink time domain resource.

Optionally, the network-side device sends a first configuration to the terminal, and the first configuration is used for configuring: whether the terminal sends the PRACH on the second PRACH transmission resource; or

it is determined that the terminal sends the PRACH on the second PRACH transmission resource in a case that the terminal has not sent the PRACH in a PRACH repetition.

Optionally, in a case that the first PRACH transmission resource includes a shared physical random access channel transmission occasion RO and an additionally configured RO,

the additionally configured RO is determined to be invalid in at least one of the following cases:

the RO overlaps with a downlink time domain resource determined by the configuration of the flexible TDD mode;

a gap between the RO and a downlink time domain resource determined by the configuration of the flexible TDD mode is smaller than or equal to a first preset value;

the RO overlaps with a downlink subband determined by the configuration of the duplex mode; and

the RO overlaps with a guardband determined by the configuration of the duplex mode.

Optionally, in a case that the first PRACH transmission resource includes a shared RO and an additionally configured RO,

the shared RO and the additionally configured RO are semi-statically configured by higher-layer signaling in at least one of the following resources:

an uplink subband and a flexible subband.

Optionally, the method further includes:

the network-side device determines whether the RO that abandons the PRACH transmission is mapped to the shared RO according to a configuration mode of at least one of the downlink subband, the guardband and the downlink time domain resource; or

the network-side device determines whether the RO that abandons the PRACH transmission is mapped to the shared RO according to an access mode of the PRACH.

Optionally, the PRACH transmission resource includes a PRACH repetition resource;
and/or

the configuration of the flexible TDD mode includes a configuration of an enhanced flexible TDD mode;
and/or
the configuration of the duplex mode includes a configuration of an evolved duplex mode.

It is to be noted that the present embodiment is an implementation of a corresponding network-side device in the embodiment shown in FIG. 2. For the specific implementation of the present embodiment, refer to the related description in the embodiment shown in FIG. 2, which will not be repeated in the present embodiment to avoid repetition.

Please refer to FIG. 10. FIG. 10 is a flowchart of another method for determining a physical random access channel transmission resource provided by an embodiment of this application. As shown in FIG. 10, the method includes:
Step 1001: A network-side device sends configuration information to a terminal, where the configuration information is used for configuring at least one of:

a plurality of start sub time domain resource indexes, where the plurality of start sub time domain resource indexes are used for determining: a PRACH transmission resource in a time domain resource for a configuration of a flexible TDD mode; and
one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

The configuration information configuring the at least one of the above may be that it includes the at least one of the above, or indicates the at least one of the above.

Optionally, the flexible TDD time domain resource is a flexible TDD slot, and the start sub time domain resource index is a start symbol index,
where each start sub time domain resource index is used for determining at least one RO.

Optionally, in a case that one start sub time domain resource index and a plurality of numbers of ROs for PRACH repetition are configured,
the start sub time domain resource index and a first number of ROs for PRACH repetition are used for determining a first RO, and a second number of ROs for PRACH repetition and a first available symbol after the first RO are used for determining a second RO.

It is to be noted that the present embodiment is an implementation of a corresponding network-side device in the embodiment shown in FIG. 2. For the specific implementation of the present embodiment, refer to the related description in the embodiment shown in FIG. 2, which will not be repeated in the present embodiment to avoid repetition.

Please refer to FIG. 11. FIG. 11 is a structural diagram of an apparatus for determining a physical random access channel transmission resource provided by an embodiment of this application. As shown in FIG. 11, the apparatus includes:

an execution module 1101, configured to perform a target operation of a physical random access channel PRACH transmission resource based on a target configuration,
where the target configuration includes at least one of:

a configuration of a duplex mode and a configuration of a flexible time division duplex TDD mode; and
the target operation includes at least one of:
determining the validity of the PRACH transmission resource;
determining whether to transmit on the PRACH transmission resource; and
determining the PRACH transmission resource.

Optionally, the determining the validity of the PRACH transmission resource includes:

the validity of the PRACH transmission resource in a case of contention based random access CBRA is determined; and
the validity of the PRACH transmission resource in a case of contention free random access CFRA is determined.

Optionally, the configuration of the duplex mode includes a configuration of a cell specific duplex mode, a configuration of a UE specific full duplex mode, a configuration of a cell specific full duplex mode, or a configuration of a semi-static full duplex mode; and

the determining the validity of the PRACH transmission resource includes:

the validity of the PRACH transmission resource in the case of CBRA is determined based on the configuration of the cell specific duplex mode; or

the validity of the PRACH transmission resource in the case of CBRA is determined based on at least one of the configuration of the UE specific full duplex mode and the configuration of the flexible TDD mode; or

the validity of the PRACH transmission resource in the case of CBRA is determined based on at least one of the configuration of the cell specific full duplex mode and the configuration of the flexible TDD mode; or

the validity of the PRACH transmission resource in the case of CBRA is determined based on at least one of the configuration of the semi-static full duplex mode and the configuration of the flexible TDD mode.

Optionally, the terminal indicates through the PRACH that the terminal supports at least one of:
a capability of supporting an evolved full duplex mode and a capability of supporting an enhanced flexible TDD mode.

Optionally, the configuration of the duplex mode includes the configuration of the cell specific full duplex mode or the configuration of the semi-static full duplex mode, and the determining the validity of the PRACH transmission resource includes:

the validity of the PRACH transmission resource in the case of CFRA is determined based on at least one of the configuration of the cell specific full duplex mode and the configuration of the flexible TDD mode; or

the validity of the PRACH transmission resource in the case of CFRA is determined based on at least one of the configuration of the semi-static full duplex mode and the configuration of the flexible TDD mode.

Optionally, the determining whether to transmit on the PRACH transmission resource includes:
whether to transmit on the PRACH transmission resource in a case of contention based random access CBRA is determined.

Optionally, the configuration of the duplex mode includes at least one of the configuration of the UE specific full duplex mode and a configuration of a dynamic full duplex mode, and the determining whether to transmit on the PRACH transmission resource includes:

whether to transmit on the PRACH transmission resource in the case of CBRA is determined based on at least one of the configuration of the UE specific full duplex mode and the configuration of the flexible TDD mode; or

whether to transmit on the PRACH transmission resource in the case of CBRA is determined based on at least one of the configuration of the dynamic full duplex mode and the configuration of the flexible TDD mode.

Optionally, in a case that downlink control information DCI or media access control control element MAC CE indicates at least one of the configuration of the full duplex mode and the configuration of the flexible TDD mode, the terminal abandons sending the PRACH on a first PRACH transmission resource, or the terminal sends the PRACH on the first PRACH transmission resource.

The first PRACH transmission resource overlaps with a downlink subband resource, or the first PRACH transmission resource overlaps with a downlink time domain resource.

Optionally, the terminal determines based on a network-side configuration: to abandon sending the PRACH on the first PRACH transmission resource, or to send the PRACH on the first PRACH transmission resource; or

the terminal determines on its own: to abandon sending the PRACH on the first PRACH transmission resource, or to send the PRACH on the first PRACH transmission resource; or

to abandon sending the PRACH on the first PRACH transmission resource in a case that the terminal has already sent the PRACH in a PRACH repetition; and to send the PRACH on the first PRACH transmission resource in a case that the terminal has not sent the PRACH in the PRACH repetition.

Optionally, in a case that the PRACH transmission resource includes a shared physical random access channel transmission occasion RO and an additionally configured RO, the determining the validity of the PRACH transmission resource includes:
the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and

the RO overlaps with a guardband determined by the configuration of the duplex mode.

Optionally, in a case that the PRACH transmission resource includes a shared RO and an additionally configured RO, the determining the PRACH transmission resource includes:

the shared RO and the additionally configured RO that are semi-statically configured by higher-layer signaling are determined, where the shared RO and the additionally configured RO are configured in at least one of the following resources:

an uplink subband and a flexible subband.

Optionally, in a case that the PRACH transmission resource includes a shared RO and an additionally configured RO, the shared RO is configured to transmit first N PRACHs in a PRACH repetition and the additionally configured RO is configured to transmit remaining PRACHs in the PRACH repetition, the determining whether to transmit on the PRACH transmission resource includes:

the additionally configured RO abandons PRACH transmission in at least one of the following cases:

the RO overlaps with a downlink subband;
the RO overlaps with a guardband; and
the RO overlaps with a downlink time domain resource.

Optionally, the apparatus further includes:

a first determination module, configured to determine whether the RO that abandons the PRACH transmission is mapped to the shared RO according to a configuration mode of at least one of the downlink subband, the guardband and the downlink time domain resource; or
a second determination module, configured to determine whether the RO that abandons the PRACH transmission is mapped to the shared RO according to an access mode of the PRACH.

Optionally, the determining the PRACH transmission resource includes:

the PRACH transmission resource is determined based on a plurality of start sub time domain resource indexes for a flexible TDD time domain resource of the configuration of the flexible TDD mode; or
the PRACH transmission resource is determined based on one start sub time domain resource index and a plurality of numbers of ROs for PRACH repetition for the flexible TDD time domain resource of the configuration of the flexible TDD mode.

Optionally, the flexible TDD time domain resource is a flexible TDD slot, and the start sub time domain resource index is a start symbol index,
where each start sub time domain resource index is used for determining at least one RO.

Optionally, in a case that the PRACH transmission resource is determined based on one start sub time domain resource index and a plurality of numbers of ROs for PRACH repetition,
the start sub time domain resource index and a first number of ROs for PRACH repetition are used for determining a first RO, and a second number of ROs for PRACH repetition and a first available symbol after the first RO are used for determining a second RO.

Optionally, the PRACH transmission resource includes a PRACH repetition resource;
and/or

the configuration of the flexible TDD mode includes a configuration of an enhanced flexible TDD mode;
and/or
the configuration of the duplex mode includes a configuration of an evolved duplex mode.

The apparatus for determining a physical random access channel transmission resource can improve the configuration flexibility of the resource for PRACH transmission.

In the embodiments of this application, the apparatus for determining a physical random access channel transmission resource may be an electronic device, such as an electronic device having an operating system, or a component within an electronic device, such as an integrated circuit or chip. The electronic device may be a terminal or any other device except a terminal. Exemplarily, the terminal may include but is not limited to the type of the terminal listed in the embodiments of this application, and the other device may be a server, a network attached storage (Network Attached Storage, NAS) or the like, which is not specifically limited in the embodiments of this application.

The apparatus for determining a physical random access channel transmission resource provided in the embodiments of this application can implement the various processes implemented in the method embodiment illustrated in FIG. 2 and achieve the same technical effect, which will not be repeated here to avoid repetition.

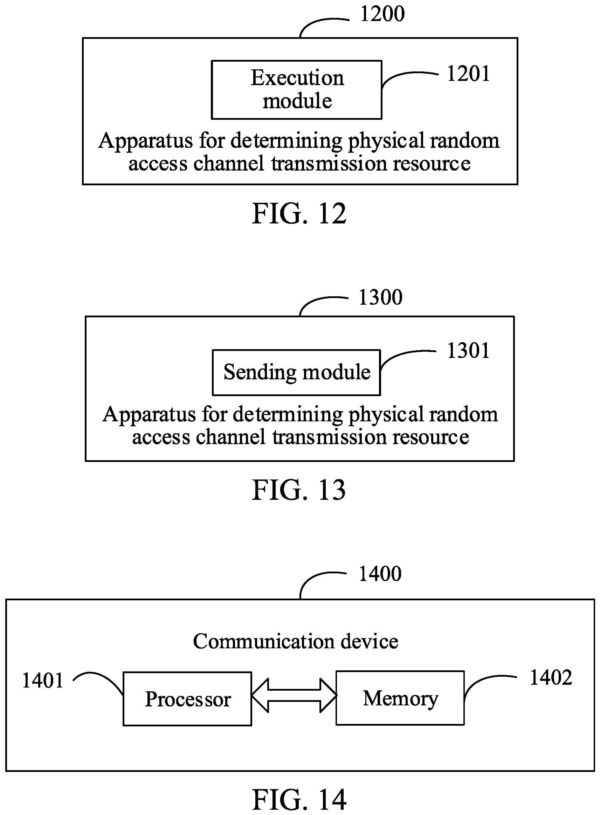

Please refer to FIG. 12. FIG. 12 is a structural diagram of an apparatus for determining a physical random access channel transmission resource provided by an embodiment of this application. As shown in FIG. 12, the apparatus includes:

an execution module 1201, configured to perform a target operation of a physical random access channel PRACH transmission resource based on a target configuration,

where the target configuration includes at least one of:

a configuration of a duplex mode and a configuration of a flexible time division duplex TDD mode; and
the target operation includes at least one of:
receiving a PRACH on a valid first PRACH transmission resource, where the validity of the first PRACH transmission resource is determined based on the target configuration; and
receiving a PRACH on a second PRACH transmission resource, where the second PRACH transmission resource is a PRACH resource determined to have PRACH transmission thereon based on the target configuration.

Optionally, the configuration of the duplex mode includes a configuration of a cell specific duplex mode, a configuration of a UE specific full duplex mode, a configuration of a cell specific full duplex mode, or a configuration of a semi-static full duplex mode; and

in a case of contention based random access CBRA,
the validity of the first PRACH transmission resource is determined based on the configuration of the cell specific duplex mode; or
the validity of the first PRACH transmission resource is determined based on at least one of the configuration of the UE specific full duplex mode and the configuration of the flexible TDD mode; or
the validity of the first PRACH transmission resource is determined based on at least one of the configuration of the cell specific full duplex mode and the configuration of the flexible TDD mode; or
the validity of the first PRACH transmission resource is determined based on at least one of the configuration of the semi-static full duplex mode and the configuration of the flexible TDD mode.

Optionally, a network-side device receives capability information of a terminal, the capability information is indicated through the PRACH, and the capability information includes at least one of:
a capability of supporting an evolved full duplex mode and a capability of supporting an enhanced flexible TDD mode.

Optionally, the configuration of the duplex mode includes the configuration of the cell specific full duplex mode or the configuration of the semi-static full duplex mode; and

in the case of contention based random access CBRA,
the validity of the first PRACH transmission resource is determined based on at least one of the configuration of the cell specific full duplex mode and the configuration of the flexible TDD mode; or
the validity of the first PRACH transmission resource is determined based on at least one of the configuration of the semi-static full duplex mode and the configuration of the flexible TDD mode.

Optionally, the configuration of the duplex mode includes at least one of the configuration of the UE specific full duplex mode and a configuration of a dynamic full duplex mode;

the second PRACH transmission resource is determined to have PRACH transmission thereon based on at least one of the configuration of the UE specific full duplex mode and the configuration of the flexible TDD mode; or
the second PRACH transmission resource is determined to have PRACH transmission thereon based on at least one of the configuration of the UE specific full duplex mode and the configuration of the flexible TDD mode; or
the second PRACH transmission resource is determined to have PRACH transmission thereon based on at least one of the configuration of the dynamic full duplex mode and the configuration of the flexible TDD mode.

Optionally, in a case that downlink control information DCI or media access control control element MAC CE indicates at least one of the configuration of the full duplex mode and the configuration of the flexible TDD mode, it is determined that the second PRACH transmission resource has PRACH transmission thereon,
where the second PRACH transmission resource overlaps with a downlink subband resource, or the second PRACH transmission resource overlaps with a downlink time domain resource.

Optionally, the network-side device sends a first configuration to the terminal, and the first configuration is used for configuring: whether the terminal sends the PRACH on the second PRACH transmission resource; or

it is determined that the terminal sends the PRACH on the second PRACH transmission resource in a case that the terminal has not sent the PRACH in a PRACH repetition.

Optionally, in a case that the first PRACH transmission resource includes a shared physical random access channel transmission occasion RO and an additionally configured RO,

the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband determined by the configuration of the duplex mode.

Optionally, in a case that the first PRACH transmission resource includes a shared RO and an additionally configured RO,

the shared RO and the additionally configured RO are semi-statically configured by higher-layer signaling in at least one of the following resources:

an uplink subband and a flexible subband.

Optionally, the apparatus further includes:

a first determination module, configured to determine whether the RO that abandons the PRACH transmission is mapped to the shared RO according to a configuration mode of at least one of the downlink subband, the guardband and the downlink time domain resource; or
a second determination module, configured to determine whether the RO that abandons the PRACH transmission is mapped to the shared RO according to an access mode of the PRACH.

Optionally, the PRACH transmission resource includes a PRACH repetition resource;
and/or

the configuration of the flexible TDD mode includes a configuration of an enhanced flexible TDD mode;
and/or
the configuration of the duplex mode includes a configuration of an evolved duplex mode.

It is to be noted that the present embodiment is an implementation of a corresponding network-side device in the embodiment shown in FIG. 9. For the specific implementation of the present embodiment, refer to the related description in the embodiment shown in FIG. 9, which will not be repeated in the present embodiment to avoid repetition.

The apparatus for determining a physical random access channel transmission resource can improve the configuration flexibility of the resource for PRACH transmission.

In the embodiments of this application, the apparatus for determining a physical random access channel transmission resource may be an electronic device, such as an electronic device having an operating system, or a component within an electronic device, such as an integrated circuit or chip. The electronic device may be a network-side device or any other device except a terminal. Exemplarily, the network-side device may include but is not limited to the type of the network-side device listed in the embodiments of this application, and the other device may be a server, a network attached storage (Network Attached Storage, NAS) or the like, which is not specifically limited in the embodiments of this application.

The apparatus for determining a physical random access channel transmission resource provided in the embodiments of this application can implement the various processes implemented in the method embodiment illustrated in FIG. 9 and achieve the same technical effect, which will not be repeated here to avoid repetition.

Please refer to FIG. 13. FIG. 13 is a structural diagram of an apparatus for determining a physical random access channel transmission resource provided by an embodiment of this application. As shown in FIG. 13, the apparatus includes:

a sending module, configured to send configuration information to a terminal, where the configuration information is used for configuring at least one of:

a plurality of start sub time domain resource indexes, where the plurality of start sub time domain resource indexes are used for determining: a PRACH transmission resource in a time domain resource for a configuration of a flexible TDD mode; and

one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

Optionally, the flexible TDD time domain resource is a flexible TDD slot, and the start sub time domain resource index is a start symbol index,

where each start sub time domain resource index is used for determining at least one RO.

Optionally, in a case that one start sub time domain resource index and a plurality of numbers of ROs for PRACH repetition are configured,

the start sub time domain resource index and a first number of ROs for PRACH repetition are used for determining a first RO, and a second number of ROs for PRACH repetition and a first available symbol after the first RO are used for determining a second RO.

It is to be noted that the present embodiment is an implementation of a corresponding network-side device in the embodiment shown in FIG. 10. For the specific implementation of the present embodiment, refer to the related description in the embodiment shown in FIG. 10, which will not be repeated in the present embodiment to avoid repetition.

The apparatus for determining a physical random access channel transmission resource can improve the configuration flexibility of the resource for PRACH transmission.

In the embodiments of this application, the apparatus for determining a physical random access channel transmission resource may be an electronic device, such as an electronic device having an operating system, or a component within an electronic device, such as an integrated circuit or chip. The electronic device may be a network-side device or any other device except a terminal. Exemplarily, the network-side device may include but is not limited to the type of the network-side device listed in the embodiments of this application, and the other device may be a server, a network attached storage (Network Attached Storage, NAS) or the like, which is not specifically limited in the embodiments of this application.

The apparatus for determining a physical random access channel transmission resource provided in the embodiments of this application can implement the various processes implemented in the method embodiment illustrated in FIG. 9 and achieve the same technical effect, which will not be repeated here to avoid repetition.

Optionally, as shown in FIG. 14, an embodiment of this application further provides a communication device 1400, which includes a processor 1401 and a memory 1402. Programs or instructions runnable on the processor 1401 are stored on the memory 1402. For example, in a case that the communication device 1400 is a terminal, the programs or instructions, when executed by the processor 1401, implement the various steps of the method for determining a physical random access channel transmission resource, and can achieve the same technical effect, which will not be repeated here to avoid repetition.

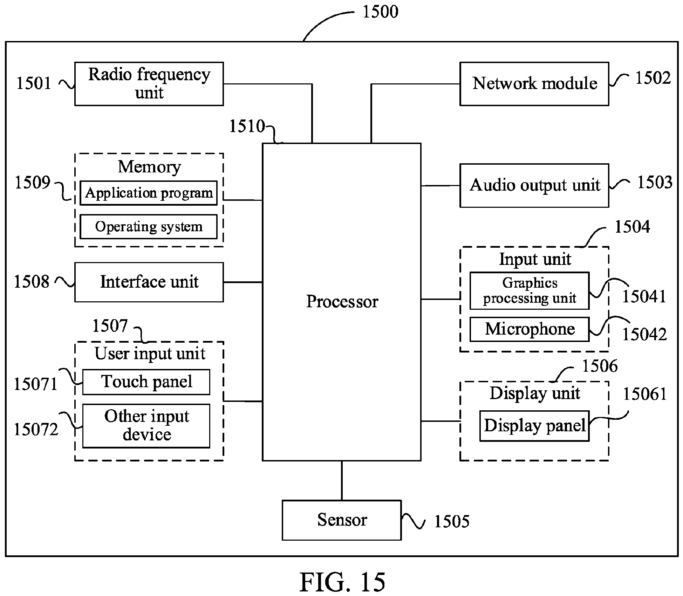

An embodiment of this application further provides a terminal, which includes a processor and a communication interface. The processor is configured to perform a target operation of a physical random access channel PRACH transmission resource based on a target configuration, where the target configuration includes at least one of: a configuration of a duplex mode and a configuration of a flexible time division duplex TDD mode; and the target operation includes at least one of: determining the validity of the PRACH transmission resource; determining whether to transmit on the PRACH transmission resource; and determining the PRACH transmission resource. This terminal embodiment corresponds to the above terminal-side method embodiment. The various implementation processes and modes in the above method embodiment are applicable to this terminal embodiment, and can achieve the same technical effect. Specifically, FIG. 15 is a schematic structural diagram of a hardware implementing a terminal according to an embodiment of this application.

The terminal 1500 includes, but is not limited to, at least part of components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

It can be understood by those skilled in the art that the terminal 1500 may further include a power supply (such as a battery) for supplying power to the components. The power supply may be logically connected with the processor 1510 by a power management system, thus implementing functions such as charging, discharging, and power consumption management by using the power management system. The terminal structure illustrated in FIG. 15 constitutes no limitation on the terminal, and the terminal may include more or fewer components than those illustrated therein, or some components may be combined, or a different component deployment may be used, which will not be repeated here.

It is to be understood that in the embodiments of this application, the input unit 1504 may include a graphics processing unit (Graphics Processing Unit, GPU) 15041 and a microphone 15042. The graphics processing unit 15041 performs processing on image data of a static picture or a video that is obtained by an image capturing device (for example, a camera) in a video capturing mode or an image capturing mode. The display unit 1506 may include a display panel 15061, and the display panel 15061 may be configured in the form of liquid crystal display, organic light emitting diode, and the like. Specifically, the user input unit 1507 includes at least one of a touch panel 15071 and another input device 15072. The touch panel 15071 is also referred to as touch screen. The touch panel 15071 may include two parts, namely a touch detection apparatus and a touch controller. The another input device 15072 may include, but is not limited to, a physical keyboard, a functional key (such as a volume control key or a switch key), a track ball, a mouse, and a joystick, which will not be repeated here.

In the embodiment of this application, the radio frequency unit 1501 receives downlink data from the network-side device and then transmits the downlink data to the processor 1510 for processing. In addition, the radio frequency unit 1501 may send uplink data to the network-side device. Generally, the radio frequency unit 1501 includes, but is not limited to, an antenna, an amplifier, a transceiver, a coupler, a low-noise amplifier, a duplexer, and the like.

The memory 1509 may be configured to store software programs or instructions and various data. The memory 1509 may mainly include a first storage area for storing programs or instructions and a second storage area for storing data. The first storage area may store an operating system, application programs or instructions required by at least one function (for example, a sound playback function or an image display function), and the like. In addition, the memory 1509 may be a volatile memory or a non-volatile memory, or the memory 1509 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), or a direct rambus RAM (Direct Rambus RAM, DRRAM). The memory 1509 in the embodiment of this application includes, but is not limited to, these and any other suitable types of memories.

The processor 1510 may include one or more processing units. Optionally, the processor 1510 may integrate an application processor and a modem processor. The application processor mainly processes operations of the operating system, a user interface, an application program and the like. The modem processor mainly processes wireless communication signal, which, for example, is a baseband processor. It is to be understood that the foregoing modem processor may not be integrated into the processor 1510.

The processor 1510 is configured to perform a target operation of a physical random access channel PRACH transmission resource based on a target configuration, where the target configuration includes at least one of:

a configuration of a duplex mode and a configuration of a flexible time division duplex TDD mode; and
the target operation includes at least one of:
determining the validity of the PRACH transmission resource;
determining whether to transmit on the PRACH transmission resource; and
determining the PRACH transmission resource.

Optionally, the determining the validity of the PRACH transmission resource includes:

the validity of the PRACH transmission resource in a case of contention based random access CBRA is determined; and
the validity of the PRACH transmission resource in a case of contention free random access CFRA is determined.

Optionally, the configuration of the duplex mode includes a configuration of a cell specific duplex mode, a configuration of a UE specific full duplex mode, a configuration of a cell specific full duplex mode, or a configuration of a semi-static full duplex mode; and
the determining the validity of the PRACH transmission resource includes:

the validity of the PRACH transmission resource in the case of CBRA is determined based on the configuration of the cell specific duplex mode; or
the validity of the PRACH transmission resource in the case of CBRA is determined based on at least one of the configuration of the UE specific full duplex mode and the configuration of the flexible TDD mode; or
the validity of the PRACH transmission resource in the case of CBRA is determined based on at least one of the configuration of the cell specific full duplex mode and the configuration of the flexible TDD mode; or
the validity of the PRACH transmission resource in the case of CBRA is determined based on at least one of the configuration of the semi-static full duplex mode and the configuration of the flexible TDD mode.

Optionally, the terminal indicates through the PRACH that the terminal supports at least one of:

a capability of supporting an evolved full duplex mode and a capability of supporting an enhanced flexible TDD mode.

Optionally, the configuration of the duplex mode includes the configuration of the cell specific full duplex mode or the configuration of the semi-static full duplex mode, and the determining the validity of the PRACH transmission resource includes:

the validity of the PRACH transmission resource in the case of CFRA is determined based on at least one of the configuration of the cell specific full duplex mode and the configuration of the flexible TDD mode; or

the validity of the PRACH transmission resource in the case of CFRA is determined based on at least one of the configuration of the semi-static full duplex mode and the configuration of the flexible TDD mode.

Optionally, the determining whether to transmit on the PRACH transmission resource includes:
whether to transmit on the PRACH transmission resource in a case of contention based random access CBRA is determined.

Optionally, the configuration of the duplex mode includes at least one of the configuration of the UE specific full duplex mode and a configuration of a dynamic full duplex mode, and the determining whether to transmit on the PRACH transmission resource includes:

whether to transmit on the PRACH transmission resource in the case of CBRA is determined based on at least one of the configuration of the UE specific full duplex mode and the configuration of the flexible TDD mode; or

whether to transmit on the PRACH transmission resource in the case of CBRA is determined based on at least one of the configuration of the dynamic full duplex mode and the configuration of the flexible TDD mode.

Optionally, in a case that downlink control information DCI or media access control control element MAC CE indicates at least one of the configuration of the full duplex mode and the configuration of the flexible TDD mode, the terminal abandons sending the PRACH on a first PRACH transmission resource, or the terminal sends the PRACH on the first PRACH transmission resource.

The first PRACH transmission resource overlaps with a downlink subband resource, or the first PRACH transmission resource overlaps with a downlink time domain resource.

Optionally, the terminal determines based on a network-side configuration: to abandon sending the PRACH on the first PRACH transmission resource, or to send the PRACH on the first PRACH transmission resource; or

the terminal determines on its own: to abandon sending the PRACH on the first PRACH transmission resource, or to send the PRACH on the first PRACH transmission resource; or

to abandon sending the PRACH on the first PRACH transmission resource in a case that the terminal has already sent the PRACH in a PRACH repetition; and to send the PRACH on the first PRACH transmission resource in a case that the terminal has not sent the PRACH in the PRACH repetition.

Optionally, in a case that the PRACH transmission resource includes a shared physical random access channel transmission occasion RO and an additionally configured RO, the determining the validity of the PRACH transmission resource includes:
the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband determined by the configuration of the duplex mode.

Optionally, in a case that the PRACH transmission resource includes a shared RO and an additionally configured RO, the determining the PRACH transmission resource includes:
the shared RO and the additionally configured RO that are semi-statically configured by higher-layer signaling are determined, where the shared RO and the additionally configured RO are configured in at least one of the following resources:
an uplink subband and a flexible subband.

Optionally, in a case that the PRACH transmission resource includes a shared RO and an additionally configured RO, the shared RO is configured to transmit first N PRACHs in a PRACH repetition and the additionally configured RO is configured to transmit remaining PRACHs in the PRACH repetition, the determining whether to transmit on the PRACH transmission resource includes:

the additionally configured RO abandons PRACH transmission in at least one of the following cases:

> the RO overlaps with a downlink subband;
> the RO overlaps with a guardband; and
> the RO overlaps with a downlink time domain resource.

Optionally, the processor 1510 is further configured to:

> determine whether the RO that abandons the PRACH transmission is mapped to the shared RO according to a configuration mode of at least one of the downlink subband, the guardband and the downlink time domain resource; or
> determine whether the RO that abandons the PRACH transmission is mapped to the shared RO according to an access mode of the PRACH.

Optionally, the determining the PRACH transmission resource includes:

> the PRACH transmission resource is determined based on a plurality of start sub time domain resource indexes for a flexible TDD time domain resource of the configuration of the flexible TDD mode; or
> the PRACH transmission resource is determined based on one start sub time domain resource index and a plurality of numbers of ROs for PRACH repetition for the flexible TDD time domain resource of the configuration of the flexible TDD mode.

Optionally, the flexible TDD time domain resource is a flexible TDD slot, and the start sub time domain resource index is a start symbol index,
where each start sub time domain resource index is used for determining at least one RO.

Optionally, in a case that the PRACH transmission resource is determined based on one start sub time domain resource index and a plurality of numbers of ROs for PRACH repetition,
the start sub time domain resource index and a first number of ROs for PRACH repetition are used for determining a first RO, and a second number of ROs for PRACH repetition and a first available symbol after the first RO are used for determining a second RO.

Optionally, the PRACH transmission resource includes a PRACH repetition resource;
and/or

> the configuration of the flexible TDD mode includes a configuration of an enhanced flexible TDD mode;
> and/or
> the configuration of the duplex mode includes a configuration of an evolved duplex mode.

The terminal can improve the configuration flexibility of the resource for PRACH transmission.

An embodiment of this application further provides a network-side device, which includes a processor and a communication interface. The processor is configured to perform a target operation of a physical random access channel PRACH transmission resource based on a target configuration, where the target configuration includes at least one of: a configuration of a duplex mode and a configuration of a flexible time division duplex TDD mode; and the target operation includes at least one of: receiving a PRACH on a valid first PRACH transmission resource, where the validity of the first PRACH transmission resource is determined based on the target configuration; receiving a PRACH on a second PRACH transmission resource, where the second PRACH transmission resource is a PRACH resource determined to have PRACH transmission thereon based on the target configuration; and configuring a first configuration, where the first configuration is used for determining the PRACH transmission resource. This network-side device embodiment corresponds to the above method embodiment. The various implementation processes and modes in the above method embodiment are applicable to this network-side device embodiment, and can achieve the same technical effect.

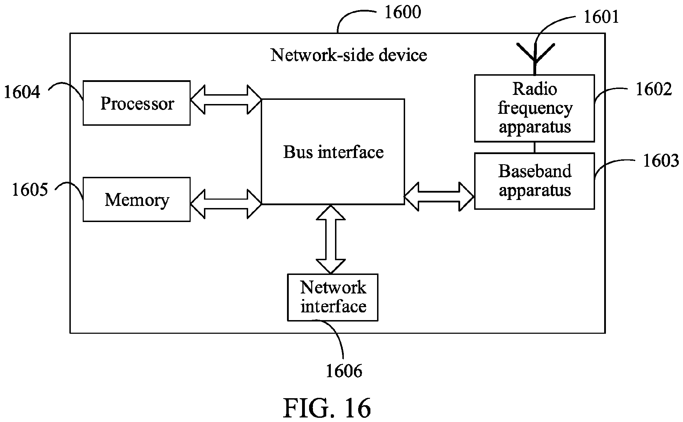

Specifically, an embodiment of this application further provides a network-side device. As shown in FIG. 16, the network-side device 16000 includes: an antenna 1601, a radio frequency apparatus 1602, a baseband apparatus 1603, a processor 1604, and a memory 1605. The antenna 1601 is connected with the radio frequency apparatus 1602. In an uplink direction, the radio frequency apparatus 1602 receives information through the antenna 1601 and sends the received information to the baseband apparatus 1603 for processing. In a downlink direction, the baseband apparatus 1603 processes the information to be sent and sends it to the radio frequency apparatus 1602. The radio frequency apparatus 1602 processes the received information and sends it out through the antenna 1601.

The method executed by the network-side device in the above embodiments can be implemented in the baseband apparatus 1603. The baseband apparatus 1603 includes a baseband processor.

The baseband apparatus 1603 may include, for example, at least one baseband board. A plurality of chips are provided on the baseband board. As shown in FIG. 16, one chip, for example, is the baseband processor and is connected with the memory 1605 through a bus interface and configured to call a program in the memory 1605 to perform operations on the network device illustrated in the method embodiment.

The network-side device may further include a network interface 1606. The interface is, for example, a common public radio interface (common public radio interface, CPRI).

Specifically, the network-side device 16000 in the embodiment of this application further includes: instructions or programs stored in the memory 1605 and runnable on the processor 1604. The processor 1604 calls the instructions or programs in the memory 1605 to implement the method implemented by each module illustrated in FIG. 3 and achieve the same technical effect. To avoid repetition, it will not be repeated here.

In one embodiment, the processor 1604 is configured to perform a target operation of a physical random access channel PRACH transmission resource based on a target configuration,
where the target configuration includes at least one of:

    a configuration of a duplex mode and a configuration of a flexible time division duplex TDD mode; and
    the target operation includes at least one of:

        receiving a PRACH on a valid first PRACH transmission resource, where the validity of the first PRACH transmission resource is determined based on the target configuration; and
        receiving a PRACH on a second PRACH transmission resource, where the second PRACH transmission resource is a PRACH resource determined to have PRACH transmission thereon based on the target configuration.

Optionally, the configuration of the duplex mode includes a configuration of a cell specific duplex mode, a configuration of a UE specific full duplex mode, a configuration of a cell specific full duplex mode, or a configuration of a semi-static full duplex mode; and

    in a case of contention based random access CBRA,
    the validity of the first PRACH transmission resource is determined based on the configuration of the cell specific duplex mode; or
    the validity of the first PRACH transmission resource is determined based on at least one of the configuration of the UE specific full duplex mode and the configuration of the flexible TDD mode; or
    the validity of the first PRACH transmission resource is determined based on at least one of the configuration of the cell specific full duplex mode and the configuration of the flexible TDD mode; or
    the validity of the first PRACH transmission resource is determined based on at least one of the configuration of the semi-static full duplex mode and the configuration of the flexible TDD mode.

Optionally, the network-side device receives capability information of a terminal, the capability information is indicated through the PRACH, and the capability information includes at least one of:
a capability of supporting an evolved full duplex mode and a capability of supporting an enhanced flexible TDD mode.

Optionally, the configuration of the duplex mode includes the configuration of the cell specific full duplex mode or the configuration of the semi-static full duplex mode; and

    in the case of contention based random access CBRA,
    the validity of the first PRACH transmission resource is determined based on at least one of the configuration of the cell specific full duplex mode and the configuration of the flexible TDD mode; or
    the validity of the first PRACH transmission resource is determined based on at least one of the configuration of the semi-static full duplex mode and the configuration of the flexible TDD mode.

Optionally, the configuration of the duplex mode includes at least one of the configuration of the UE specific full duplex mode and a configuration of a dynamic full duplex mode;

    the second PRACH transmission resource is determined to have PRACH transmission thereon based on at least one of the configuration of the UE specific full duplex mode and the configuration of the flexible TDD mode; or
    the second PRACH transmission resource is determined to have PRACH transmission thereon based on at least one of the configuration of the UE specific full duplex mode and the configuration of the flexible TDD mode; or
    the second PRACH transmission resource is determined to have PRACH transmission thereon based on at least one of the configuration of the dynamic full duplex mode and the configuration of the flexible TDD mode.

Optionally, in a case that downlink control information DCI or media access control control element MAC CE indicates at least one of the configuration of the full duplex mode and the configuration of the flexible TDD mode, it is determined that the second PRACH transmission resource has PRACH transmission thereon,
where the second PRACH transmission resource overlaps with a downlink subband resource, or the second PRACH transmission resource overlaps with a downlink time domain resource.

Optionally, the network-side device sends a first configuration to the terminal, and the first configuration is used for configuring: whether the terminal sends the PRACH on the second PRACH transmission resource; or
it is determined that the terminal sends the PRACH on the second PRACH transmission resource in a case that the terminal has not sent the PRACH in a PRACH repetition.

Optionally, in a case that the first PRACH transmission resource includes a shared physical random access channel transmission occasion RO and an additionally configured RO,
the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband determined by the configuration of the duplex mode.

Optionally, in a case that the first PRACH transmission resource includes a shared RO and an additionally configured RO,
the shared RO and the additionally configured RO are semi-statically configured by higher-layer signaling in at least one of the following resources:
an uplink subband and a flexible subband.

Optionally, the processor 1604 is further configured to:

determine whether the RO that abandons the PRACH transmission is mapped to the shared RO according to a configuration mode of at least one of the downlink subband, the guardband and the downlink time domain resource; or
determine whether the RO that abandons the PRACH transmission is mapped to the shared RO according to an access mode of the PRACH.

Optionally, the PRACH transmission resource includes a PRACH repetition resource;
and/or

the configuration of the flexible TDD mode includes a configuration of an enhanced flexible TDD mode;
and/or
the configuration of the duplex mode includes a configuration of an evolved duplex mode.

In another embodiment, the processor 1604 is configured to send configuration information to the terminal, where the configuration information is used for configuring at least one of:

a plurality of start sub time domain resource indexes, where the plurality of start sub time domain resource indexes are used for determining: a PRACH transmission resource in a time domain resource for a configuration of a flexible TDD mode; and
one start sub time domain resource index and a plurality of numbers of ROs for PRACH repetition, where the one start sub time domain resource index and the plurality of numbers of ROs for PRACH repetition are used for determining: the PRACH transmission resource in the time domain resource for the configuration of the flexible TDD mode.

Optionally, the flexible TDD time domain resource is a flexible TDD slot, and the start sub time domain resource index is a start symbol index,
where each start sub time domain resource index is used for determining at least one RO.

Optionally, in a case that one start sub time domain resource index and a plurality of numbers of ROs for PRACH repetition are configured,
the start sub time domain resource index and a first number of ROs for PRACH repetition are used for determining a first RO, and a second number of ROs for PRACH repetition and a first available symbol after the first RO are used for determining a second RO.

It is to be noted that the present embodiment is an implementation of a corresponding network-side device in the embodiment shown in FIG. 9 or FIG. 10. For the specific implementation of the present embodiment, refer to the related description in the embodiment shown in FIG. 9 or FIG. 10, which will not be repeated in the present embodiment to avoid repetition.

The network-side device can improve the configuration flexibility of the resource for PRACH transmission.

An embodiment of this application further provides a readable storage medium. Programs or instructions are stored on the readable storage medium. The programs or instructions, when executed by a processor, implement the various processes of the embodiment of the method for determining a physical random access channel transmission resource, and can achieve the same technical effect, which will not be repeated here to avoid repetition.

The processor is a processor in the terminal described in the above embodiment. The readable storage medium may include a computer-readable storage medium, such as a computer read-only memory ROM, a random access memory RAM, a magnetic disk, and an optical disk.

An embodiment of this application further provides a chip. The chip includes a processor and a communication interface coupled with the processor. The processor is configured to run programs or instructions to implement the various processes of the embodiment of the method for determining a physical random access channel transmission resource, and can achieve the same technical effect, which will not be repeated here to avoid repetition.

It is to be understood that the chip provided by the embodiment of this application may also be referred to as system-level chip, system chip, chip system, or system on chip.

An embodiment of this application further provides a computer program/program product. The computer program/program product is stored in a storage medium. The computer program/program product is executed by at least one processor to implement the various processes of the embodiment of the method for determining a physical random access channel transmission resource, and can achieve the same technical effect, which will not be repeated here to avoid repetition.

An embodiment of this application further provides a system for determining a resource, which includes: a terminal and a network-side device. The terminal may be configured to perform the steps of the method for determining a physical random access channel transmission resource on a terminal side, and the network-side device may be configured to perform the steps of the method for determining a physical random access channel transmission resource on a network side.

It is to be noted that the terms "include", "comprise", or any other variation thereof herein are intended to cover a non-exclusive inclusion, such that a process, method, article or apparatus including a series of elements not only includes those listed elements, but also includes other elements not expressly listed, or also includes elements inherent to the process, method, article or apparatus. Without further limitations, the element limited by the statement "including a..." does not preclude the presence of another identical element in a process, method, article or apparatus that includes that element. In addition, the scope of the method and apparatus in the implementations of this application is not limited to performing functions in the order shown or discussed, but may also include performing functions in a substantially simultaneous manner or in the opposite order according to the involved functions. For example, the described methods may be executed in a different order from the described order, and various steps may also be added, omitted or combined. In addition, features described with reference to certain examples may be combined in other examples.

Through the description of the above implementations, those skilled in the art can clearly understand that the above embodiment methods may be implemented through software and necessary universal hardware platforms. Of course, they may also be implemented through hardware. However, in many cases, the former is preferred. Based on such an understanding, the technical solution of this application essentially, or the part contributing to the prior art may be implemented in the form of a software product. The computer software product is stored in a storage medium (such as ROM/RAM, magnetic disk or optical disk) and includes several instructions to enable a terminal (which may be a mobile phone, a computer, a server, an air conditioner or a network device) to execute the methods described in the embodiments of this application.

The embodiments of this application have been described above with reference to the drawings. However, this application is not limited to the specific implementations above. The specific implementations above are only exemplary rather than restrictive. Under the inspiration of this application, those of ordinary skill in the art may make many variations without departing from the essence of this application and the scope of protection claimed by the claims, and all these variations still fall within the scope of protection of this application.

**Claims**

1. A method for determining a physical random access channel transmission resource, comprising:

    performing, by a terminal, a target operation of a physical random access channel PRACH transmission resource based on a target configuration,
    wherein the target configuration comprises at least one of:

a configuration of a duplex mode and a configuration of a flexible time division duplex TDD mode; and the target operation comprises at least one of:

> determining the validity of the PRACH transmission resource;
> determining whether to transmit on the PRACH transmission resource; and
> determining the PRACH transmission resource.

2. The method according to claim 1, wherein the configuration of the duplex mode comprises a configuration of a cell specific duplex mode, a configuration of a UE specific full duplex mode, a configuration of a cell specific full duplex mode, or a configuration of a semi-static full duplex mode; and the determining the validity of the PRACH transmission resource comprises:

> determining the validity of the PRACH transmission resource in a case of contention based random access CBRA based on the configuration of the cell specific duplex mode; or
> determining the validity of the PRACH transmission resource in the case of CBRA based on at least one of the configuration of the UE specific full duplex mode and the configuration of the flexible TDD mode; or
> determining the validity of the PRACH transmission resource in the case of CBRA based on at least one of the configuration of the cell specific full duplex mode and the configuration of the flexible TDD mode; or
> determining the validity of the PRACH transmission resource in the case of CBRA based on at least one of the configuration of the semi-static full duplex mode and the configuration of the flexible TDD mode.

3. The method according to claim 1, wherein the terminal indicates through the PRACH that the terminal supports at least one of:
a capability of supporting an evolved full duplex mode and a capability of supporting an enhanced flexible TDD mode.

4. The method according to claim 1, wherein the configuration of the duplex mode comprises a configuration of a cell specific full duplex mode or a configuration of a semi-static full duplex mode, and the determining the validity of the PRACH transmission resource comprises:

> determining the validity of the PRACH transmission resource in a case of contention free random access CFRA based on at least one of the configuration of the cell specific full duplex mode and the configuration of the flexible TDD mode; or
> determining the validity of the PRACH transmission resource in the case of CFRA based on at least one of the configuration of the semi-static full duplex mode and the configuration of the flexible TDD mode.

5. The method according to claim 1, wherein the configuration of the duplex mode comprises at least one of a configuration of a UE specific full duplex mode and a configuration of a dynamic full duplex mode, and the determining whether to transmit on the PRACH transmission resource comprises:

> determining whether to transmit on the PRACH transmission resource in a case of CBRA based on at least one of the configuration of the UE specific full duplex mode and the configuration of the flexible TDD mode; or
> determining whether to transmit on the PRACH transmission resource in the case of CBRA based on at least one of the configuration of the dynamic full duplex mode and the configuration of the flexible TDD mode.

6. The method according to claim 5, wherein in a case that downlink control information DCI or media access control control element MAC CE indicates at least one of the configuration of the full duplex mode and the configuration of the flexible TDD mode, the terminal abandons sending the PRACH on a first PRACH transmission resource, or the terminal sends the PRACH on the first PRACH transmission resource, wherein the first PRACH transmission resource overlaps with a downlink subband resource, or the first PRACH transmission resource overlaps with a downlink time domain resource.

7. The method according to claim 6, wherein the terminal determines based on a network-side configuration: to abandon sending the PRACH on the first PRACH transmission resource, or to send the PRACH on the first PRACH transmission resource; or

> the terminal determines on its own: to abandon sending the PRACH on the first PRACH transmission resource, or to send the PRACH on the first PRACH transmission resource; or
> to abandon sending the PRACH on the first PRACH transmission resource in a case that the terminal has already sent the PRACH in a PRACH repetition; to send the PRACH on the first PRACH transmission resource in a case that the terminal has not sent the PRACH in the PRACH repetition.

8. The method according to claim 1, wherein in a case that the PRACH transmission resource comprises a shared physical random access channel transmission occasion RO and an additionally configured RO, the determining the validity of the PRACH transmission resource comprises:
determining that the additionally configured RO is invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband determined by the configuration of the duplex mode.

9. The method according to claim 1, wherein in a case that the PRACH transmission resource comprises a shared RO and an additionally configured RO, the determining the PRACH transmission resource comprises:
determining the shared RO and the additionally configured RO that are semi-statically configured by higher-layer signaling, wherein the shared RO and the additionally configured RO are configured in at least one of the following resources:
an uplink subband and a flexible subband.

10. The method according to claim 1, wherein in a case that the PRACH transmission resource comprises a shared RO and an additionally configured RO, the shared RO is configured to transmit first N PRACHs in a PRACH repetition and the additionally configured RO is configured to transmit remaining PRACHs in the PRACH repetition, the determining whether to transmit on the PRACH transmission resource comprises:
abandoning, by the additionally configured RO, PRACH transmission in at least one of the following cases:

the RO overlaps with a downlink subband;
the RO overlaps with a guardband; and
the RO overlaps with a downlink time domain resource.

11. The method according to claim 10, wherein the method further comprises:

determining, by the terminal, whether the RO that abandons the PRACH transmission is mapped to the shared RO according to a configuration mode of at least one of the downlink subband, the guardband and the downlink time domain resource; or
determining whether the RO that abandons the PRACH transmission is mapped to the shared RO according to an access mode of the PRACH.

12. The method according to any one of claims 1 to 11, wherein the determining the PRACH transmission resource comprises:

determining the PRACH transmission resource based on a plurality of start sub time domain resource indexes for a flexible TDD time domain resource of the configuration of the flexible TDD mode; or
determining the PRACH transmission resource based on one start sub time domain resource index and a number of ROs for PRACH repetition for the flexible TDD time domain resource of the configuration of the flexible TDD mode.

13. The method according to claim 12, wherein the flexible TDD time domain resource is a flexible TDD slot, and the start sub time domain resource index is a start symbol index,
wherein each start sub time domain resource index is used for determining at least one RO.

14. The method according to claim 13, wherein in a case of determining the PRACH transmission resource based on one start sub time domain resource index and a plurality of numbers of ROs for PRACH repetition,
the start sub time domain resource index and a first number of ROs for PRACH repetition are used for determining a first RO, and a second number of ROs for PRACH repetition and a first available symbol after the first RO are used for determining a second RO.

**15.** The method according to any one of claims 1 to 11, wherein the PRACH transmission resource comprises a PRACH repetition resource;
and/or

the configuration of the flexible TDD mode comprises a configuration of an enhanced flexible TDD mode;
and/or
the configuration of the duplex mode comprises a configuration of an evolved duplex mode.

**16.** A method for determining a physical random access channel transmission resource, comprising:

performing, by a network-side device, a target operation of a physical random access channel PRACH transmission resource based on a target configuration,
wherein the target configuration comprises at least one of:

a configuration of a duplex mode and a configuration of a flexible time division duplex TDD mode; and
the target operation comprises at least one of:

receiving a PRACH on a valid first PRACH transmission resource, wherein the validity of the first PRACH transmission resource is determined based on the target configuration; and
receiving a PRACH on a second PRACH transmission resource, wherein the second PRACH transmission resource is a PRACH resource determined to have PRACH transmission thereon based on the target configuration.

**17.** The method according to claim 16, wherein the configuration of the duplex mode comprises a configuration of a cell specific duplex mode, a configuration of a UE specific full duplex mode, a configuration of a cell specific full duplex mode, or a configuration of a semi-static full duplex mode;

in a case of contention based random access CBRA,
the validity of the first PRACH transmission resource is determined based on the configuration of the cell specific duplex mode; or
the validity of the first PRACH transmission resource is determined based on at least one of the configuration of the UE specific full duplex mode and the configuration of the flexible TDD mode; or
the validity of the first PRACH transmission resource is determined based on at least one of the configuration of the cell specific full duplex mode and the configuration of the flexible TDD mode; or
the validity of the first PRACH transmission resource is determined based on at least one of the configuration of the semi-static full duplex mode and the configuration of the flexible TDD mode.

**18.** The method according to claim 16, wherein the network-side device receives capability information of a terminal, the capability information is indicated through the PRACH, and the capability information comprises at least one of:
a capability of supporting an evolved full duplex mode and a capability of supporting an enhanced flexible TDD mode.

**19.** The method according to claim 16, wherein the configuration of the duplex mode comprises a configuration of a cell specific full duplex mode or a configuration of a semi-static full duplex mode; and

in a case of contention based random access CBRA,
the validity of the first PRACH transmission resource is determined based on at least one of the configuration of the cell specific full duplex mode and the configuration of the flexible TDD mode; or
the validity of the first PRACH transmission resource is determined based on at least one of the configuration of the semi-static full duplex mode and the configuration of the flexible TDD mode.

**20.** The method according to claim 16, wherein the configuration of the duplex mode comprises at least one of a configuration of a UE specific full duplex mode and a configuration of a dynamic full duplex mode;

the second PRACH transmission resource is determined to have PRACH transmission thereon based on at least one of the configuration of the UE specific full duplex mode and the configuration of the flexible TDD mode; or
the second PRACH transmission resource is determined to have PRACH transmission thereon based on at least one of the configuration of the UE specific full duplex mode and the configuration of the flexible TDD mode; or
the second PRACH transmission resource is determined to have PRACH transmission thereon based on at least one of the configuration of the dynamic full duplex mode and the configuration of the flexible TDD mode.

21. The method according to claim 20, wherein in a case that downlink control information DCI or media access control control element MAC CE indicates at least one of the configuration of the full duplex mode and the configuration of the flexible TDD mode, it is determined that the second PRACH transmission resource has PRACH transmission thereon, wherein the second PRACH transmission resource overlaps with a downlink subband resource, or the second PRACH transmission resource overlaps with a downlink time domain resource.

22. The method according to claim 21, wherein the network-side device sends a first configuration to the terminal, and the first configuration is used for configuring: whether the terminal sends the PRACH on the second PRACH transmission resource; or
it is determined that the terminal sends the PRACH on the second PRACH transmission resource in a case that the terminal has not sent the PRACH in a PRACH repetition.

23. The method according to claim 16, wherein in a case that the first PRACH transmission resource comprises a shared physical random access channel transmission occasion RO and an additionally configured RO,
the additionally configured RO is determined to be invalid in at least one of the following cases:

the RO overlaps with a downlink time domain resource determined by the configuration of the flexible TDD mode;
a gap between the RO and a downlink time domain resource determined by the configuration of the flexible TDD mode is smaller than or equal to a first preset value;
the RO overlaps with a downlink subband determined by the configuration of the duplex mode; and
the RO overlaps with a guardband determined by the configuration of the duplex mode.

24. The method according to claim 16, wherein in a case that the first PRACH transmission resource comprises a shared RO and an additionally configured RO,
the shared RO and the additionally configured RO are semi-statically configured by higher-layer signaling in at least one of the following resources:
an uplink subband and a flexible subband.

25. The method according to claim 24, wherein the method further comprises:

determining, by the network-side device, whether the RO that abandons the PRACH transmission is mapped to the shared RO according to a configuration mode of at least one of the downlink subband, the guardband and the downlink time domain resource; or
determining, by the network-side device, whether the RO that abandons the PRACH transmission is mapped to the shared RO according to an access mode of the PRACH.

26. The method according to any one of claims 16 to 25, wherein the PRACH transmission resource comprises a PRACH repetition resource;
and/or

the configuration of the flexible TDD mode comprises a configuration of an enhanced flexible TDD mode;
and/or
the configuration of the duplex mode comprises a configuration of an evolved duplex mode.

27. A method for determining a physical random access channel transmission resource, comprising:
sending, by a network-side device, configuration information to a terminal, wherein the configuration information is used for configuring at least one of:

a plurality of start sub time domain resource indexes, wherein the plurality of start sub time domain resource indexes are used for determining: a PRACH transmission resource in a time domain resource for a configuration of a flexible TDD mode; and
one start sub time domain resource index and a plurality of numbers of ROs for PRACH repetition, wherein the one start sub time domain resource index and the plurality of numbers of ROs for PRACH repetition are used for determining: the PRACH transmission resource in the time domain resource for the configuration of the flexible TDD mode.

28. The method according to claim 27, wherein the flexible TDD time domain resource is a flexible TDD slot, and the start sub time domain resource index is a start symbol index,
   wherein each start sub time domain resource index is used for determining at least one RO.

29. The method according to claim 28, wherein in a case that one start sub time domain resource index and a plurality of numbers of ROs for PRACH repetition are configured,
   the start sub time domain resource index and a first number of ROs for PRACH repetition are used for determining a first RO, and a second number of ROs for PRACH repetition and a first available symbol after the first RO are used for determining a second RO.

30. An apparatus for determining a physical random access channel transmission resource, comprising:

   an execution module, configured to perform a target operation of a physical random access channel PRACH transmission resource based on a target configuration,
   wherein the target configuration comprises at least one of:

   a configuration of a duplex mode and a configuration of a flexible time division duplex TDD mode; and the target operation comprises at least one of:

   determining the validity of the PRACH transmission resource;
   determining whether to transmit on the PRACH transmission resource; and
   determining the PRACH transmission resource.

31. An apparatus for determining a physical random access channel transmission resource, comprising:

   an execution module, configured to perform a target operation of a physical random access channel PRACH transmission resource based on a target configuration,
   wherein the target configuration comprises at least one of:

   a configuration of a duplex mode and a configuration of a flexible time division duplex TDD mode; and the target operation comprises at least one of:

   receiving a PRACH on a valid first PRACH transmission resource, wherein the validity of the first PRACH transmission resource is determined based on the target configuration; and
   receiving a PRACH on a second PRACH transmission resource, wherein the second PRACH transmission resource is a PRACH resource determined to have PRACH transmission thereon based on the target configuration.

32. An apparatus for determining a physical random access channel transmission resource, comprising:
   a sending module, configured to send configuration information to a terminal, wherein the configuration information is used for configuring at least one of:

   a plurality of start sub time domain resource indexes, wherein the plurality of start sub time domain resource indexes are used for determining: a PRACH transmission resource in a time domain resource for a configuration of a flexible TDD mode; and
   one start sub time domain resource index and a plurality of numbers of ROs for PRACH repetition, wherein the one start sub time domain resource index and the plurality of numbers of ROs for PRACH repetition are used for determining: the PRACH transmission resource in the time domain resource for the configuration of the flexible TDD mode.

33. A terminal, comprising a processor and a memory, wherein the memory stores programs or instructions runnable on the processor, and the programs or instructions, when executed by the processor, implement the steps of the method for determining a physical random access channel transmission resource according to any one of claims 1 to 15.

34. A network-side device, comprising a processor and a memory, wherein the memory stores programs or instructions runnable on the processor, and the programs or instructions, when executed by the processor, implement the steps of the method for determining a physical random access channel transmission resource according to any one of claims 16 to 26, or the programs or instructions, when executed by the processor, implement the steps of the method for determining a physical random access channel transmission resource according to any one of claims 27 to 29.

35. A readable storage medium, wherein the readable storage medium stores programs or instructions, and the programs or instructions, when executed by a processor, implement the steps of the method for determining a physical random access channel transmission resource according to any one of claims 1 to 15, or the programs or instructions, when executed by the processor, implement the steps of the method for determining a physical random access channel transmission resource according to any one of claims 16 to 26, or the programs or instructions, when executed by the processor, implement the steps of the method for determining a physical random access channel transmission resource according to any one of claims 27 to 29.

12

Network-side
device

11

11

Terminal

Terminal

FIG. 1

Start

A terminal performs a target operation of a PRACH transmission
resource based on a target configuration

201

End

FIG. 2

Frequency

gNB1                                                    UE3

UL

UE1    DL

Guardband

UE2

Uplink slot            Downlink slot

Time

FIG. 3

Slot n                              Slot n+1

▦ DL        ▨ S        ☐ UL

FIG. 4

Frequency

☐     RO for initial PRACH transmission
▨▤▥▧  RO for PRACH repetition

| RO1 | RO3 |
| RO0 | RO2 |

...

| RO1 | RO1 | RO3 | RO3 |
| RO0 | RO0 | RO2 | RO2 |

DL DL DL UL UL UL UL DL DL UL UL UL UL UL

PRACH slot        Offset slot length (slot-        Enhanced flexible TDD configuration,    Time
                  level offset)                    applicable to slots for PRACH repetition

FIG. 5

□ RO for initial PRACH transmission
▨▥▧▨ RO for PRACH repetition

One BWP divided into two subbands

| RO1 | RO3 |
|-----|-----|
| RO0 | RO2 |

PRACH slot

...

| RO1 | RO1 | RO3 | RO3 | GAP |
|-----|-----|-----|-----|-----|
| RO0 | RO0 | RO2 | RO2 | UL |

Offset slot length
(slot-level offset)

Time

Frequency

FIG. 6

DL ▦ Downlink OFDM symbol

UL □ OFDM symbols of RO w/o for PRACH repetition

UL ▨ OFDM symbols of ROs for PRACH repetition

0  1  2  3  4  5  6  7  8  9  10  11  12  13

Slot

Time

FIG. 7

DL ▦ Downlink OFDM symbol

UL □ OFDM symbols of RO w/o for PRACH repetition

UL ▨ OFDM symbols of ROs for PRACH repetition

UL ▤ OFDM symbols not for PRACH repetition

From first symbol available
for PRACH repetition

0  1  2  3  4  5  6  7  8  9  10  11  12  13

Slot

Time

FIG. 8

Start

A network-side device performs a target operation of a PRACH transmission resource based on a target configuration — 901

End

FIG. 9

Start

A network-side device sends configuration information to a terminal — 1001

End

FIG. 10

— 1100

Execution module — 1101

Apparatus for determining physical random access channel transmission resource

FIG. 11

1200

Execution
module — 1201

Apparatus for determining physical random
access channel transmission resource

FIG. 12

1300

Sending module — 1301

Apparatus for determining physical random
access channel transmission resource

FIG. 13

1400

Communication device

1401 — Processor ⟺ Memory — 1402

FIG. 14

1500

| 1501 | Radio frequency unit | | | Network module | 1502 |

Processor 1510

1509 Memory
Application program
Operating system

1508 Interface unit

1507 User input unit
15071 Touch panel
15072 Other input device

Audio output unit 1503

1504 Input unit
Graphics processing unit 15041
Microphone 15042

1506 Display unit 15061
Display panel

Sensor 1505

FIG. 15

FIG. 16

| **INTERNATIONAL SEARCH REPORT** | International application No. |
| --- | --- |
| | **PCT/CN2023/090583** |

**A.    CLASSIFICATION OF SUBJECT MATTER**

H04W 74/08(2009.01)i;  H04W 72/04(2023.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC: 物理随机接入信道, 传输, 资源, 模式, 时分双工, 灵活, 有效, 可用, 竞争随机接入, 传输机会, 频带, 重叠; ENTXT, 3GPP: PRACH, transmission, resource, mode, TDD, flexible, effective, available, CBRA, RO, band, overlap

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110351877 A (VIVO COMMUNICATION TECHNOLOGY CO., LTD.) 18 October 2019 (2019-10-18) <br> description, paragraphs [0039]-[0272] | 1-35 |
| A | CN 113767707 A (GUANGDONG OPPO MOBILE COMMUNICATIONS CO., LTD.) 07 December 2021 (2021-12-07) <br> entire document | 1-35 |
| A | US 2021282136 A1 (KEYSIGHT TECHNOLOGIES, INC.) 09 September 2021 (2021-09-09) <br> entire document | 1-35 |
| A | US 2021360660 A1 (SAMSUNG ELECTRONICS CO., LTD.) 18 November 2021 (2021-11-18) <br> entire document | 1-35 |
| A | HUAWEI et al. "On PRACH resource indication and level determination during random access" <br> *3GPP tsg_ran\WG1_RL1 R1-156446*, 06 November 2015 (2015-11-06), <br> entire document | 1-35 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 August 2023** | **21 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090583**

| Patent document cited in search report | | | Publication date (day/month/year) | Patent family member(s) | | | Publication date (day/month/year) |
|---|---|---|---|---|---|---|---|
| CN | 110351877 | A | 18 October 2019 | JP | 2021520136 | A | 12 August 2021 |
| | | | | KR | 20200139755 | A | 14 December 2020 |
| | | | | KR | 102411910 | B1 | 22 June 2022 |
| | | | | US | 2023021134 | A1 | 19 January 2023 |
| | | | | WO | 2019192469 | A1 | 10 October 2019 |
| | | | | EP | 3780865 | A1 | 17 February 2021 |
| | | | | EP | 3780865 | A4 | 09 June 2021 |
| | | | | US | 2021014889 | A1 | 14 January 2021 |
| | | | | US | 11553519 | B2 | 10 January 2023 |
| CN | 113767707 | A | 07 December 2021 | | None | | |
| US | 2021282136 | A1 | 09 September 2021 | ES | 2852149 | A1 | 13 September 2021 |
| US | 2021360660 | A1 | 18 November 2021 | US | 2023053082 | A1 | 16 February 2023 |
| | | | | KR | 20230017230 | A | 03 February 2023 |
| | | | | EP | 4133886 | A1 | 15 February 2023 |
| | | | | WO | 2021230722 | A1 | 18 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210459591